# EUROPEAN PATENT APPLICATION

(11) **EP 4 848 694 A1**
(43) Date of publication of application: **02.12.2026**
(21) Application number: 25754481.7
(22) Date of filing: 06.01.2025
(51) Int. Cl.: H04L 67/10

(54) **COMMUNICATION METHOD AND APPARATUS**

(30) Priority: 16.02.2024 CN 202410180013
(71) Applicant: HUAWEI TECHNOLOGIES CO., LTD., Shenzhen, Guangdong 518129 (CN)
(72) Inventor: FENG, Zhao, Shenzhen, Guangdong 518129 (CN); FU, Zhang, Shenzhen, Guangdong 518129 (CN); WANG, Yuan, Shenzhen, Guangdong 518129 (CN)
(74) Representative: Huawei European IPR
(86) International application number: PCT/CN2025/070797
(87) International publication number: WO 2025/171754

(57) **Abstract**

Embodiments of this application provide a communication method and apparatus. The method relates to the field of communication technologies. In the method, each network element may be registered with a second network element. In this way, an initiator (for example, a first network element) of distributed learning may obtain, via the second network element, some network elements (for example, at least one third network element) that meet distributed learning requirements. Then, the first network element may determine a final participant for distributed learning from the obtained at least one third network element. This implements online determination of distributed participants, and helps improve flexibility in determining participants.

## Description

### CROSS-REFERENCE TO RELATED APPLICATIONS

This application claims priority to Chinese Patent Application No. 202410180013.5, filed with the China National Intellectual Property Administration on February 16, 2024 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

Distributed learning is a learning method for jointly training a distributed learning model based on a combination of features from a plurality of participants. A model obtained through distributed learning may be used to process various tasks. For an initiator of distributed learning, the initiator may receive a to-be-processed task and determine features required by the distributed learning model used to process the task. Since the initiator may not be able to provide all features needed to train the distributed learning model, the initiator needs to collaborate with other participants to perform distributed learning.

Currently, the initiator and other participants are agreed in advance, that is, the participants are determined offline. This manner of determining participants lacks flexibility.

### SUMMARY

This application provides a communication method and apparatus to improve flexibility in determining participants.

According to a first aspect, an embodiment of this application provides a communication method. The communication method may be performed by a first network element. The first network element may be any type of network element. The first network element may be an existing network element, a new network element, or the like. This is not limited. The first network element may be a device (for example, a terminal device or a network device), or a software module (for example, an application), a hardware module (for example, a chip), a client, or the like in the device. This is not specifically limited. The method includes: sending a first request to a second network element, where the first request is used to request discovery of a network element, the first request indicates one or more features, and a feature corresponding to data used for distributed learning model training by the network element requested to be discovered includes the one or more features; receiving first information from the second network element, where the first information indicates at least one third network element; and receiving the first information from the second network element, where the first information indicates the at least one third network element. M third network elements participate in distributed learning model training, the M third network elements are all or part of the at least one third network element, and M is a positive integer.

A distributed learning model may also be referred to as a model, and is a model obtained through learning (or training) in a distributed learning manner. The distributed learning model may be described as a distributed learning function (for example, an artificial intelligence (artificial intelligence, AI) function or a machine learning (machine learning, ML) function), property, algorithm, or the like. The first network element may be considered as an initiator of distributed learning model training, as well as one of participants. The at least one third network element discovered by the first network element via the second network element may be considered as a candidate participant in distributed learning model training. The M third network elements may be participants participating in distributed learning model training, that is, other participants than the first network element. Optionally, based on the first information, the first network element may determine the M network elements for distributed learning model training from the at least one third network element, or directly use the at least one third network element as a network element participating in distributed learning model training. This is not limited.

In this embodiment of this application, the first network element may discover the at least one third network element via the second network element, and select all or part of the at least one third network element to participate in distributed learning model training. This provides a manner in which the first network element determines the participants, without a need to negotiate about each participant in advance, and provides an online alignment manner for distributed learning model training. In addition, the first network element can independently determine the other participants at any time, that is, the first network element can flexibly determine the other participants on the one hand, and on the other hand, time at which the first network element determines the other participants is relatively flexible. Therefore, flexibility in determining participants can be improved. In addition, because the flexibility in determining participants is higher, the method may be applicable to more scenarios involving determination of participants.

In a possible implementation, the first request further indicates one or more network element types, a feature corresponding to each of the one or more network element types, and the feature corresponding to each network element type belongs to the one or more features. A network element type of the at least one third network element belongs to the one or more network element types.

The first request may be understood as (or alternatively described as) indicating the one or more network element types and the feature corresponding to each of the one or more network element types. That the feature corresponding to each network element type belongs to the one or more features may be described as follows: Each feature in the one or more features is a feature corresponding to one of the one or more network element types. That the feature corresponding to each of the one or more network element types belongs to the one or more features means that the one or more features form a combination of features corresponding to the one or more network element types. A feature corresponding to one network element type may be understood as a feature specified by the first network element for the network element type to participate in distributed learning model training.

In the foregoing implementation, the first request may be further used to specify the one or more network element types. In this way, the at least one third network element discovered by the first network element further belongs to the one or more network element types. Therefore, the M finally selected third network elements better meet a requirement of the first network element, and successful execution of subsequent distributed learning model training is ensured.

In a possible implementation, the first information further indicates a feature corresponding to each third network element in the at least one third network element.

The feature corresponding to each third network element may be a feature (supported feature) supported by the third network element, where the feature supported by each third network element is a feature in the one or more features. Alternatively, the feature corresponding to each third network element may be a feature determined by the second network element and used by the third network element to participate in distributed learning model training. When the feature corresponding to each third network element is the feature determined by the second network element and used by the third network element to participate in distributed learning model training, it does not indicate that the feature corresponding to each third network element is necessarily used to participate in distributed learning model training.

In the foregoing implementation, the first network element may discover, by using the first information, not only the at least one third network element but also the feature corresponding to the at least one third network element, thereby determining the M final third network elements configured to participate in distributed learning model training and the features used by the M third network elements to participate in distributed learning model training.

In a possible implementation, the feature corresponding to each third network element in the at least one third network element is a feature in the one or more features.

Features corresponding to any two third network elements in the at least one third network element may include a same feature (that is, there may be an overlap), or may not include a same feature (that is, there is no overlap). This is not specifically limited.

In the foregoing implementation, the first information does not need to indicate some nonessential features of the third network element, that is, features that are not used to participate in distributed learning model training. Therefore, resource overheads for transmitting the first information can be relatively reduced.

In a possible implementation, the method further includes: determining a feature used by each third network element in the M third network elements to participate in distributed learning model training; and sending second information respectively to the M third network elements, where the second information that is sent to one of the at least one third network element indicates a feature used by the third network element to participate in distributed learning model training.

In the foregoing implementation, the first network element may not only determine the M network elements configured to participate in distributed learning model training, but also determine the features used by the M third network elements to participate in distributed learning model training. This implements feature alignment between the participants in distributed learning model training, and provides a feature alignment mechanism. Feature alignment can improve accuracy of distributed learning model training.

In a possible implementation, the first information includes information about at least one network element group. Information about one network element group includes a feature corresponding to the one network element group. The one network element group includes all or part of the at least one third network element. The feature corresponding to the one network element group includes the one or more features. Optionally, the information about the one network element group further includes an identifier of the network element included in the one network element group and/or an identifier of the one network element group.

In the foregoing implementation, the second network element may group the at least one third network element. The first information indicates the at least one third network element by using the information about the at least one network element group, and may further indicate the feature corresponding to the at least one third network element. Because the one network element group may be used as another candidate participant participating in distributed learning model training, the first network element may directly select the one network element group from the at least one network element group as another final participant for distributed learning model training. In this way, the first network element can intuitively determine the M third network elements, so that a processing workload of the first network element is relatively reduced.

In a possible implementation, the first request further indicates the one or more network element types and the feature corresponding to each of the one or more network element types, and the feature corresponding to each network element type belongs to the one or more features. A network element type in the one network element group is a network element type in the one or more network element types.

In the foregoing implementation, a network element type corresponding to a feature is limited, so that the provided feature is more targeted and more accurate. For example, one feature is a user equipment (user equipment, UE) location. It is assumed that both an application function (application function, AF) and a network data analytics function (network data analytics function, NWDAF) can obtain UE location information, but a UE location obtained by the AF is more accurate. Therefore, this method may be used to specify that the AF provides the UE location.

In a possible implementation, the method further includes: sending third information respectively to the at least one third network element, where the third information that is sent to one of the at least one third network element indicates the third network element to feed back a feature corresponding to the third network element; and receiving fourth information respectively from the at least one third network element, where the fourth information that is received from one of the at least one third network element indicates a feature corresponding to each third network element.

In the foregoing implementation, the first network element may request the feature corresponding to the at least one first network element from the at least one third network element. In this way, the feature corresponding to the at least one third network element can be more accurately obtained, and the second network element does not need to notify the first network element of the feature corresponding to the at least one third network element. This reduces a processing workload of the second network element.

In a possible implementation, the method further includes: sending fifth information to the second network element, where the fifth information indicates a feature supported by the first network element.

In the foregoing implementation, the first network element may be registered with the second network element, so that the first network element can be discovered by the second network element in other distributed learning model training.

According to a second aspect, an embodiment of this application provides a communication method. The communication method may be performed by a second network element. The method may be performed by the second network element. The second network element may be any type of network element. The second network element may be an existing network element, a new network element, or the like. This is not limited. The second network element may be a device (for example, a terminal device or a network device), or a software module (for example, an application), a hardware module (for example, a chip), a client, or the like in the device. This is not specifically limited. The method includes: receiving a first request from a first network element, where the first request is used to request discovery of a network element, the first request indicates one or more features, and a feature corresponding to data used for distributed learning model training by the network element requested to be discovered includes the one or more features; and sending first information to the first network element, where the first information indicates at least one third network element. M third network elements participate in distributed learning model training, the M third network elements are all or part of the at least one third network element, and M is a positive integer.

In a possible implementation, the first request further indicates one or more network element types, a feature corresponding to each of the one or more network element types, and the feature corresponding to each network element type belongs to the one or more features. A network element type of the at least one third network element belongs to the one or more network element types.

In a possible implementation, the first information further indicates a feature corresponding to each third network element in the at least one third network element.

In a possible implementation, the feature corresponding to each third network element in the at least one third network element is a feature in the one or more features.

In a possible implementation, the first information includes information about at least one network element group. Information about one network element group includes a feature corresponding to the one network element group. The one network element group includes all or part of the at least one third network element. The feature corresponding to the one network element group includes the one or more features.

In a possible implementation, the first request further indicates the one or more network element types, the feature corresponding to each of the one or more network element types, and the feature corresponding to each network element type belongs to the one or more features. A network element type in the one network element group is a network element type in the one or more network element types.

In a possible implementation, the method further includes: receiving fifth information from the first network element, where the fifth information indicates a feature supported by the first network element.

In a possible implementation, the method further includes: receiving sixth information from the at least one third network element, where the sixth information that is received from one of the at least one third network element indicates a feature supported by the third network element.

According to a third aspect, an embodiment of this application provides a communication method. The communication method may be performed by a first network element. The method may be performed by the first network element. The first network element may be any type of network element. The first network element may be an existing network element, a new network element, or the like. This is not limited. The first network element may be a device (for example, a terminal device or a network device), or a software module (for example, an application), a hardware module (for example, a chip), a client, or the like in the device. This is not specifically limited. The method includes: determining at least one third network element; sending first information respectively to the at least one third network element, where the first information that is sent to one of the at least one third network element is used to request a feature supported by the third network element, and all or part of a feature supported by the at least one third network element is a feature corresponding to data for distributed learning model training; receiving second information respectively from the at least one third network element, where the second information that is received from one of the at least one third network element indicates a feature supported by the third network element; and determining features used by M third network elements to participate in distributed learning model training, where the M third network elements are all or part of the at least one third network element, and M is a positive integer.

In this embodiment of this application, the first network element may directly determine, from the at least one third network element, the M third network elements participating in distributed learning model training, so that flexibility in determining participants is improved. In addition, the at least one third network element is registered with a second network element, but does not register the feature supported by the at least one third network element. This reduces a risk that the feature supported by the at least one third network element is leaked, and ensures security of the feature supported by the at least one third network element.

In a possible implementation, the method further includes: sending third information respectively to the M third network elements, where the third information that is sent to one of the at least one third network element indicates a feature used by the third network element to participate in distributed learning model training.

In the foregoing implementation, the first network element may further notify the features used by the M third network elements to participate in distributed learning model training, so that a feature alignment mechanism for distributed learning model training is provided.

In a possible implementation, the determining the at least one third network element includes: receiving fourth information from the second network element, where the fourth information indicates information about the at least one third network element; and determining the at least one third network element based on the fourth information.

In the foregoing implementation, the first network element may discover the at least one third network element via the second network element, so that the first network element can intuitively and simply discover the at least one third network element.

According to a fourth aspect, an embodiment of this application provides a communication method. The communication method may be performed by a third network element. The method may be performed by the third network element. The third network element may be any type of network element. The third network element may be an existing network element, a new network element, or the like. This is not limited. The third network element may be a device (for example, a terminal device or a network device), or a software module (for example, an application), a hardware module (for example, a chip), a client, or the like in the device. This is not specifically limited. The method includes: receiving first information from a first network element, where the first information is used to request a feature supported by the third network element; and sending second information to the first network element, where the second information indicates the feature supported by the third network element.

In a possible implementation, the method further includes: receiving third information from the first network element, where the third information indicates a feature used by the third network element to participate in distributed learning model training.

In a possible implementation, the method further includes: sending fifth information to a second network element, where the fifth information indicates information about the third network element.

According to a fifth aspect, an embodiment of this application provides a communication apparatus. The communication apparatus may be the first network element in the first aspect, or a software module or a hardware module (for example, a chip) configured in the first network element. The communication apparatus includes a corresponding means (means) or module configured to perform the first aspect or any possible implementation. For example, the communication apparatus includes a processing module (sometimes also referred to as a processing unit) and a transceiver module (sometimes also referred to as a transceiver unit).

For example, the transceiver module is configured to: send a first request to a second network element, and receive first information from the second network element, where the first information indicates at least one third network element. M third network elements in the at least one third network element are configured to participate in distributed learning model training, and the M third network elements are all or part of the at least one third network element.

In a possible implementation, the communication apparatus may further perform any one of the possible implementations of the first aspect. Details are not described herein again.

According to a sixth aspect, an embodiment of this application provides a communication apparatus. The communication apparatus may be the second network element in the second aspect, or a software module or a hardware module (for example, a chip) configured in the second network element. The communication apparatus includes a corresponding means (means) or module configured to perform the second aspect or any possible implementation. For example, the communication apparatus includes a processing module (sometimes also referred to as a processing unit) and a transceiver module (sometimes also referred to as a transceiver unit).

For example, the transceiver module is configured to: receive a first request from a first network element, and send first information to the first network element, where the first information indicates at least one third network element. M third network elements participate in distributed learning model training, and the M third network elements are all or part of the at least one third network element.

In a possible implementation, the communication apparatus may further perform any one of the possible implementations of the second aspect. Details are not described herein again.

According to a seventh aspect, an embodiment of this application provides a communication apparatus. The communication apparatus may be the first network element in the third aspect, or a software module or a hardware module (for example, a chip) configured in the first network element. The communication apparatus includes a corresponding means (means) or module configured to perform the third aspect or any possible implementation. For example, the communication apparatus includes a processing module (sometimes also referred to as a processing unit) and a transceiver module (sometimes also referred to as a transceiver unit).

For example, the processing module is configured to determine at least one third network element. The transceiver module is configured to: send first information respectively to the at least one third network element, and receive second information respectively from the at least one third network element. The processing module is further configured to determine features used by M third network elements to participate in distributed learning model training, where the M third network elements are all or part of the at least one third network element.

In a possible implementation, the communication apparatus may further perform any one of the possible implementations of the third aspect. Details are not described herein again.

According to an eighth aspect, an embodiment of this application provides a communication apparatus. The communication apparatus may be the third network element in the fourth aspect, or a software module or a hardware module (for example, a chip) configured in the third network element. The communication apparatus includes a corresponding means (means) or module configured to perform the fourth aspect or any possible implementation. For example, the communication apparatus includes a processing module (sometimes also referred to as a processing unit) and a transceiver module (sometimes also referred to as a transceiver unit).

For example, the transceiver module is configured to: receive first information from a first network element, where the first information is used to request a feature supported by the third network element; and send second information to the first network element, where the second information indicates the feature supported by the third network element.

In a possible implementation, the communication apparatus may further perform any one of the possible implementations of the fourth aspect. Details are not described herein again.

According to a ninth aspect, an embodiment of this application provides a communication apparatus. The communication apparatus includes a processor and a memory. The memory is configured to store program instructions. The processor is configured to execute the program instructions in the memory, to perform the method according to any one of the first aspect to the fourth aspect.

Optionally, the wireless communication apparatus further includes a communication interface. The processor may be coupled to the communication interface, or the processor may be disposed independently of the communication interface.

In an implementation, when the communication apparatus is a wireless communication device, the communication interface may be a transceiver or an input/output interface. Optionally, the transceiver may be a transceiver circuit. Optionally, the input/output interface may be an input/output circuit.

In still another implementation, when the communication apparatus is a chip or a chip system, the communication interface may be an input/output interface, an interface circuit, an output circuit, an input circuit, a pin, a related circuit, or the like on the chip or the chip system. The processor may alternatively be embodied as a processing circuit or a logic circuit.

Optionally, the communication apparatus further includes other components such as an antenna, an input/output module, or an interface. The components may be hardware, software, or a combination of software and hardware.

According to a tenth aspect, an embodiment of this application provides a communication apparatus. The communication apparatus includes a processing circuit and an interface circuit. The interface circuit is configured to be coupled to a memory outside the communication apparatus, and provide a communication interface for the processing circuit to access the memory. The processing circuit is configured to execute program instructions in the memory, to implement the method according to any one of the first aspect to the fourth aspect.

During specific implementation, the communication apparatus may be a chip, an input circuit may be an input pin, an output circuit may be an output pin, and the processing circuit may be a transistor, a gate circuit, a trigger, various logic circuits, or the like. An input signal received by the input circuit may be received and input by, for example, but not limited to, a receiver. A signal output by the output circuit may be output to, for example, but not limited to, a transmitter and transmitted by the transmitter. The input circuit and the output circuit may be a same circuit, where the circuit is used as the input circuit and the output circuit at different moments. Specific implementations of the processor and the various circuits are not limited in embodiments of this application.

In an implementation, the communication apparatus may be a wireless communication device, that is, a computer device supporting a wireless communication function. Specifically, the wireless communication device may be a terminal, for example, a smartphone, or may be a radio access network device, for example, a base station. A system chip may also be referred to as a system on chip (system on chip, SoC), or an SoC chip for short. A communication chip may include a baseband processing chip and a radio frequency processing chip. The baseband processing chip is also sometimes referred to as a modem (modem) or a baseband chip. The radio frequency processing chip is also sometimes referred to as a radio frequency transceiver (transceiver) or a radio frequency chip. In a physical implementation, a part of or all chips of the communication chip may be integrated into the SoC chip. For example, the baseband processing chip is integrated into the SoC chip, and the radio frequency processing chip is not integrated into the SoC chip. The interface circuit may be a radio frequency processing chip in the wireless communication device, and a processing circuit may be a baseband processing chip in the wireless communication device.

In still another implementation, the communication apparatus may be a part of components in a wireless communication device, for example, an integrated circuit product such as a system chip or a communication chip. The interface circuit may be an input/output interface, an interface circuit, an output circuit, an input circuit, a pin, a related circuit, or the like in the chip or a chip system. A processor may alternatively be embodied as a processing circuit or a logic circuit.

According to an eleventh aspect, an embodiment of this application provides a chip system. The chip system includes a processor and an interface. The processor is configured to invoke instructions from the interface and run the instructions. When the processor executes the instructions, the method according to any one of the first aspect to the fourth aspect is implemented.

According to a twelfth aspect, an embodiment of this application provides a computer-readable storage medium. The computer-readable storage medium is configured to store a computer program or instructions. When the computer program or the instructions are run, the method according to any one of the first aspect to the fourth aspect is implemented.

According to a thirteenth aspect, an embodiment of this application provides a computer program product including instructions. When the computer program product runs on a computer, the method according to any one of the first aspect to the fourth aspect is implemented.

For beneficial effects of the second aspect and the fourth aspect to the thirteenth aspect, refer to the beneficial effects described in the first aspect or the third aspect. Details are not described herein again.

### BRIEF DESCRIPTION OF DRAWINGS

FIG. 1 is a diagram of data distribution of vertical federated learning to which an embodiment of this application is applicable;
FIG. 2 is a diagram of a distributed learning scenario to which an embodiment of this application is applicable;
FIG. 3 is a diagram of a vertical federated learning process;
FIG. 4 is a diagram of a distributed learning scenario according to an embodiment of this application;
FIG. 5 is a diagram of an NWDAF-based intelligent network architecture according to an embodiment of this application;
FIG. 6 is a diagram of another distributed learning scenario according to an embodiment of this application;
FIG. 7 is a diagram of a communication method according to an embodiment of this application;
FIG. 8 is a diagram of another communication method according to an embodiment of this application;
FIG. 9 is a diagram of yet another communication method according to an embodiment of this application;
FIG. 10 is a diagram of still another communication method according to an embodiment of this application;
FIG. 11 is a diagram of still another communication method according to an embodiment of this application;
FIG. 12 is a diagram of a structure of a communication apparatus according to an embodiment of this application;
FIG. 13 is a diagram of a structure of another communication apparatus according to an embodiment of this application; and
FIG. 14 is a diagram of a structure of still another communication apparatus according to an embodiment of this application.

### DESCRIPTION OF EMBODIMENTS

The following describes specific implementations of this application by using examples with reference to the accompanying drawings in embodiments of this application.

The following describes a part of terms in embodiments of this application, to facilitate understanding of a person skilled in the art.

### 1. Data (or dataset)

The data can be used for model training or inference. The data may be in a plurality of forms, for example, structured data such as a table or a database, or unstructured data such as a text, an image, audio, or a video. For example, the data includes at least one of service experience, a location, an average throughput, an average packet delay, a radio access type (radio access type, RAT), reference signal received power (reference signal received power, RSRP), reference signal received quality (reference signal received quality, RSRQ), or a radio access network throughput (radio access network throughput, RAN throughput) of an object (for example, a user).

The data for model training may be divided into two dimensions (or two pieces of space). One dimension is sample space, and the other dimension is feature (feature) space. The sample space represents a sample object, that is, a to-be-learned object (for example, user (user)). The feature space represents a feature for model training, that is, a to-be-learned feature of the object.

The feature may be understood as an attribute or a variable of the data, or may be understood as a feature corresponding to the data. The feature may be obtained by preprocessing raw data, for better understanding and prediction by a model. The preprocessing is one or more of sorting, vector representation, matrix representation, statistical averaging, feature extraction, dimension reduction, or the like. This is not limited. In model training, a label corresponds to the feature, where the feature is the attribute or variable describing the data, and the label is a target variable that the model is expected to predict or classify. An example of training a model for image classification is used for description. To train a model for distinguishing between an image of a cat and an image of a dog, a set of labeled images is used as training data. Each image includes two parts: a feature and a label. In this example, the feature is an attribute describing the image, and may include at least one of a pixel value, a color histogram, a texture feature, or the like. The feature provides key information about the image to help the model understand image content. The label is a result of image classification, that is, whether the image is the cat or the dog.

For example, refer to Table 1. Table 1 is an example of the data.

**Table 1**

| Sample space (for example, user) | Radio access type | Reference signal received power (decibel-milliwatt (dBm)) | Reference signal received quality | Radio access network throughput (megabyte per second (Mbps)) |
|---|---|---|---|---|
| User 1 | Satellite access | -135 | -5 | 200 |
| User 2 | New radio (new radio) access | -80 | -10 | 300 |

As shown in Table 1, the sample space corresponding to the data includes the user 1 and the user 2, and the feature space includes the radio access type, the reference signal received power, the reference signal received quality, and the radio access network throughput.

### 2. Distributed learning

Distributed learning is a learning method in which data of a plurality of participants is combined for model learning. In embodiments of this application, a model trained in a distributed learning manner is referred to as a distributed learning model. The distributed learning model may be an AI model, an ML model, a property, an algorithm, or the like. This is not specifically limited.

A typical type of distributed learning is federated learning (federated learning, FL). Federated learning is a machine learning framework that can effectively help a plurality of users use data and perform machine learning modeling while meeting requirements of user privacy protection, data security, and government regulations. Federated learning, as a distributed machine learning paradigm, can effectively resolve a problem of data silos by jointly modeling without sharing user data, to break down data silos technically and implement artificial intelligence (AI) collaboration. Distributed learning is applicable when two training entities cannot share their models (for example, due to privacy between an AF and an NWDAF, or due to privacy between NWDAFs from a plurality of vendors) and cannot share input data for model training (to avoid massive data collection or privacy issues).

Based on differences between data source features of participants, federated learning may be classified into three types: horizontal federated learning, transfer learning, and vertical federated learning (vertical federated learning, VFL). In horizontal federated learning, sample space corresponding data has a low overlap degree (or described as a small overlap), but sample features have a high overlap degree (or described as a large overlap). For example, participants of horizontal federated learning include a participant 1 and a participant 2, data provided by the participant 1 includes a feature 1 and a feature 2 of a user 1, and data provided by the participant 2 includes a feature 1 and a feature 2 of a user 2. Transfer learning is a method for applying a model for a source task in a source domain to a target task in a target domain. For example, a task A (the source task) is to classify a cat and a tiger in an image, and a task B (the target task) is to distinguish between lengths of the cat and the tiger in the image. In a conventional machine learning method, two different models need to be trained respectively for the two totally different tasks. However, in transfer learning, the model for the task A may be fully used, and fine-tuning is performed on the model for the task A to obtain the model applicable to the task B.

As a machine learning technology, vertical federated learning may be used to implement model training and inference when members are unwilling to share original datasets, and is applicable to a case in which training sample space (for example, samples) of participants (or participators) has a high overlap degree, but data (or features) of the participants has a low overlap degree. In vertical federated learning, different datasets (or features) of common samples of a plurality of participants are combined for federated learning, that is, data (or features) of the participants is vertically divided, which is why it is referred to as vertical federated learning.

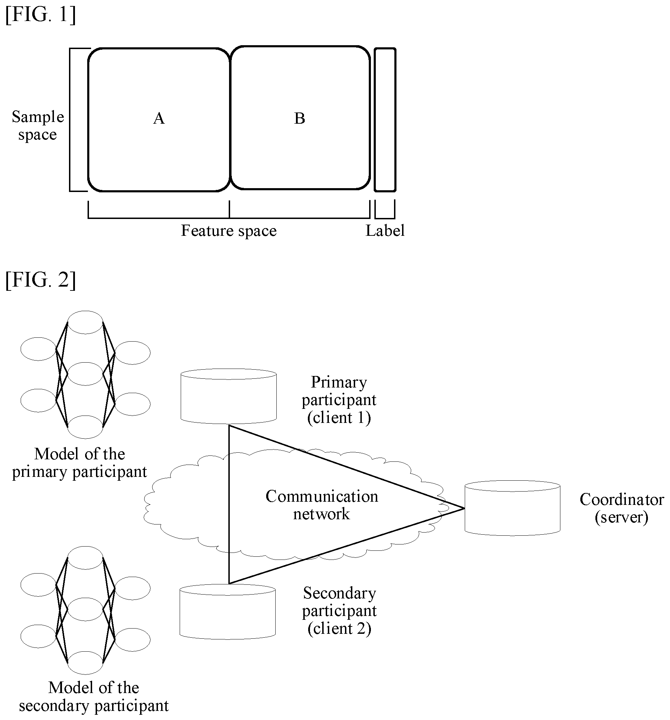

For example, FIG. 1 is a diagram of data distribution of vertical federated learning. In FIG. 1, an example in which participants of federated learning include a participant A and a participant B is used. As shown in FIG. 1, sample space corresponding to the participant A and sample space corresponding to the participant B have a high overlap degree, while feature space corresponding to the participant A and feature space corresponding to the participant B have a low overlap degree. For example, a dataset of the participant A includes data of the user 1, data of the user 2, data of a user 3, and data of a user 4, where the data of each user includes a feature 1, a feature 2, a feature 3, a feature 4, and a feature 5; and a dataset of the participant B includes data of the user 1, the user 2, the user 3, the user 4, and a user 5, where the data of each user includes a feature 6, a feature 7, a feature 8, a feature 9, and a feature 10. It can be learned that the participant A and the participant B have a small intersection set of features, but most samples are the same. During vertical federated learning, the participant A and the participant B may select, from the respective datasets, the features (namely the feature 1, the feature 2, the feature 3, the feature 4, the feature 5, the feature 6, the feature 7, the feature 8, the feature 9, and the feature 10) corresponding to the same samples (namely the user 1, the user 2, the user 3, and the user 4) and labels corresponding to these features to perform vertical federated learning model training.

Each party participating in distributed learning may be considered as a participant (or a participator), and the participant may be classified into a primary participant and a secondary participant. There may be one or more secondary participants. This is not limited. The primary participant has a data label required by a distributed learning task, and optionally has a part of data features required by the distributed learning task. The secondary participant has all or part of data features corresponding to the vertical federated learning task. The primary participant may also be referred to as an initiating participant, an active participant (active participant), an active client (active client), or the like. The secondary participant may also be referred to as a passive participant (passive participant), a passive client (passive client), or the like.

Distributed learning further includes a coordinator (coordinator), or referred to as a coordinating party, a server (server), or the like. The coordinator may also be referred to as a trusted coordinator, and is responsible for maintenance of a distributed learning process, authorization, admission, and removal of a distributed learning member, and other functions, and optionally responsible for work such as encryption key distribution and intermediate information decryption. The coordinator is usually a third party independent of the task or a credible organization in the industry. In addition, a participant initiating distributed learning may be referred to as an initiator (initiator) or an initiating participant, and another participant may be considered as a passive participant. The initiator may be a primary participant, a secondary participant, or a coordinator in distributed learning. This is not limited.

A main feature of distributed learning model training (for example, joint model training for VFL) is that there are at least two models (for example, ML models), and the models are associated with different training entities (for example, network elements) (that is, one primary participant and at least one secondary participant). The primary participant and the secondary participant train respective models together. The two models have a same model objective (for example, are being trained to predict a same output, where the output is, for example, service experience), but the two models are different from each other (for example, have different types of input data). Optionally, each participant participating in distributed learning further includes a distributed learning model training ID. The distributed learning model training ID represents a unique identifier of the distributed learning process, is a unique identifier used to identify the at least two models (namely, the models from the initiating participant and the passive participant), and is associated with a distributed learning model training process.

FIG. 2 is a diagram of a distributed learning scenario to which an embodiment of this application is applicable. As shown in FIG. 2, the scenario includes a primary participant, a secondary participant, and a coordinator, and any two of the primary participant, the secondary participant, and the coordinator may communicate with each other by using a communication network. The communication network is, for example, a 5^{th} generation (5^{th} generation, 5G) communication network, a 6^{th} generation communication network, or a future evolved communication network.

Any participant (for example, the primary participant, the secondary participant, or the coordinator) in distributed learning may be implemented by using a network element. The network element in embodiments of this application may be implemented by using a device, a client (client), software (for example, an application) in a device, a hardware module (for example, a chip) in a device, a device cluster, or the like. The client may be, for example, an application running in a terminal device, or may be a terminal device running an application. Alternatively, the client may be, for example, an application or a function in the network element. This is not limited. For example, the network element is specifically a terminal device, a network device, or a third-party server. This is not limited. The primary participant has a distributed learning model of the primary participant (or referred to as a local distributed learning model of the primary participant), and the secondary participant has a distributed learning model of the secondary participant (or referred to as a local distributed learning model of the secondary participant).

FIG. 2 is illustrated by using an example in which the primary participant is a client 1, the secondary participant is a client 2, and the coordinator is a server. In practice, implementations of the primary participant, the secondary participant, and the coordinator are not limited. The primary participant or the secondary participant may be used as an initiator of distributed learning model training, and the coordinator may coordinate the primary participant and the secondary participant in distributed learning model training.

The terminal device is an apparatus having a wireless transceiver function, and may be a fixed device, a mobile device, a handheld device, a wearable device, an in-vehicle device, or a wireless apparatus (for example, a communication module or a chip system) built in the foregoing device. The terminal device is configured to connect a person, an object, a machine, and the like, and may be widely used in various scenarios, for example, including, but not limited to, the following scenarios: cellular communication, device-to-device (device-to-device, D2D) communication, vehicle-to-everything (vehicle-to-everything, V2X), machine-to-machine/machine type communication (machine-to-machine/machine type communication, M2M/MTC), an internet of things (internet of things, IoT), virtual reality (virtual reality, VR), augmented reality (augmented reality, AR), industrial control (industrial control), autonomous driving (autonomous driving), remote medical (remote medical), a smart grid (smart grid), smart furniture, a smart office, a smart wearable, smart transportation, a smart city (smart city), an uncrewed aerial vehicle, and a robot. The terminal device may sometimes be referred to as user equipment (user equipment, UE), a terminal, an access station, a UE station, a remote station, a wireless communication device, a user apparatus, or the like.

For example, the network device includes an access network device (or referred to as an access network apparatus/access network element) and/or a core network device (or referred to as a core network apparatus/core network element). The access network device is an apparatus having a wireless transceiver function, and is configured to communicate with the terminal device. The access network device includes but is not limited to a base station (BTS, NodeB, eNodeB/eNB, or gNodeB/gNB) in the communication system, a transmission reception point (transmission reception point, TRP), a subsequent evolved base station in 3GPP, an access node in a wireless fidelity (wireless fidelity, Wi-Fi) system, a wireless relay node, a wireless backhaul node, a satellite, an uncrewed aerial vehicle, or the like. The base station may be a macro base station, a micro base station, a picocell base station, a small cell, a relay station, or the like. A plurality of base stations may support networks of a same access technology mentioned above, or may support networks of different access technologies mentioned above. The base station may include one or more co-site or non-co-site transmission reception points. The access network device may alternatively be a radio controller, a central unit (central unit, CU), which may also be referred to as a convergence unit, and/or a distributed unit (distributed unit, DU) in a cloud radio access network (cloud radio access network, C(R)AN) scenario. The access network device may alternatively be a server, a wearable device, an in-vehicle device, or the like. For example, an access network device in a vehicle-to-everything (vehicle-to-everything, V2X) technology may be a roadside unit (roadside unit, RSU). The following uses an example in which the access network device is a base station for description. A plurality of access network devices in the communication system may be base stations of a same type, or may be base stations of different types. The base station may communicate with the terminal device, or may communicate with the terminal device via a relay station. The terminal device may communicate with a plurality of base stations in different access technologies.

When the access network device includes a CU and/or a DU, the CU and the DU may be understood as being obtained by dividing the access network device from a perspective of logical functions. The CU and the DU may be physically separated, or may be deployed together. This is not specifically limited in embodiments of this application. One CU may be connected to one DU, or a plurality of DUs may share one CU. The CU and the DU may be split based on a protocol stack. In a possible manner, a radio resource control (radio resource control, RRC) layer, a service data adaptation protocol stack (service data adaptation protocol, SDAP) layer, and a packet data convergence protocol (packet data convergence protocol, PDCP) layer are deployed in the CU, and a remaining radio link control (radio link control, RLC) layer, media access control (media access control, MAC) layer, and physical layer are deployed in the DU. In embodiments of this application, the CU and the DU are not necessarily split in the foregoing manner based on the protocol stack, and may alternatively be split in another manner, for example, split based on a service type.

Alternatively, the access network device may be a central unit control plane (CU-CP) node or a central unit user plane (CU-UP) node, or include a CU-CP and a CU-UP. The CU-CP is responsible for a control plane function, and mainly includes RRC and PDCP-C. The PDCP-C is mainly responsible for data encryption and decryption, integrity protection, data transmission, and the like on a control plane. The CU-UP is responsible for a user plane function, and mainly includes SDAP and PDCP-U. The SDAP is mainly responsible for processing data of a core network and mapping a flow (flow) to a bearer. The PDCP-U is mainly responsible for data plane encryption and decryption, integrity protection, header compression, sequence number maintenance, data transmission, and the like.

In different systems, the CU (including the CU-CP and the CU-UP) or the DU may also have different names, but a person skilled in the art may understand meanings thereof. For example, in an open radio access network (open radio access network, O-RAN) system, the CU may also be referred to as an O-CU (open CU), the DU may also be referred to as an O-DU, the CU-CP may also be referred to as an O-CU-CP, and the CU-UP may also be referred to as an O-CU-UP.

The core network device is configured to implement at least one of functions such as mobility management, data processing, session management, and policy and charging. Names of devices that implement core network functions in systems of different access technologies may be different. This is not limited in embodiments of this application. A 5G system is used as an example. The core network device includes an access and mobility management function (access and mobility management function, AMF), a session management function (session management function, SMF), a user plane function (user plane function, UPF), or the like.

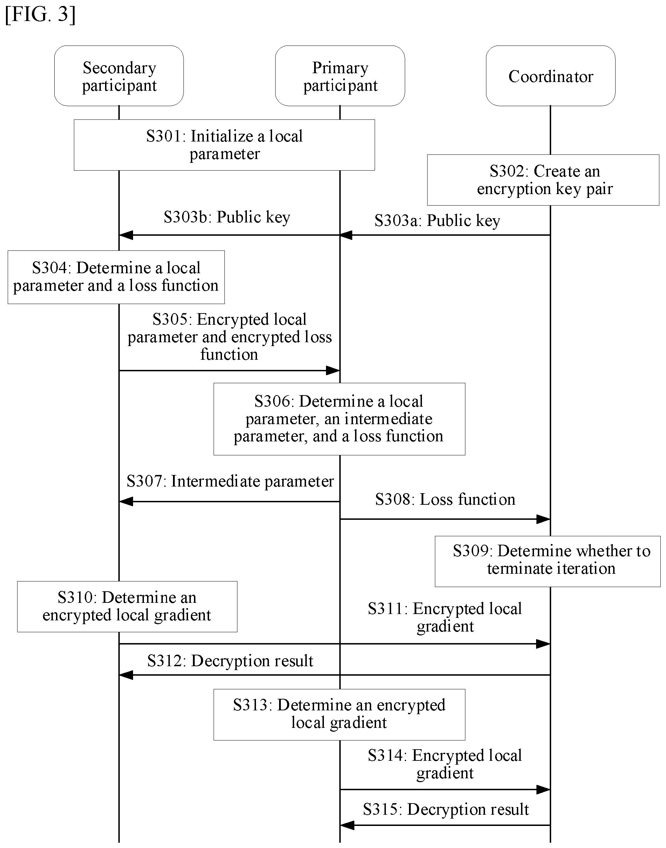

The following describes a basic procedure of distributed learning model training with reference to a diagram of a vertical federated learning process shown in FIG. 3. In FIG. 3, an example in which a homomorphic encryption algorithm is used for distributed learning is used. A primary participant in FIG. 3 is, for example, the primary participant in FIG. 2. A secondary participant in FIG. 3 is, for example, the secondary participant in FIG. 2. A coordinator in FIG. 3 is, for example, the coordinator in FIG. 2.

S301: The secondary participant and the primary participant each initialize a local parameter.

The secondary participant initializes a local parameter *Θ_{A}* of a local distributed learning model of the secondary participant, and the primary participant initializes a local parameter *Θ_{B}* of a local distributed learning model of the primary participant.

S302: The coordinator creates an encryption key pair. The coordinator creates a homomorphic encryption key pair based on the homomorphic encryption algorithm.

S303: The coordinator sends a public key to the secondary participant and the primary participant.

Specifically, S303 includes S303a and S303b. In S303a, the coordinator sends the public key to the primary participant, and correspondingly, the primary participant receives the public key from the coordinator. In S303b, the coordinator sends the public key to the secondary participant, and correspondingly, the secondary participant receives the public key from the coordinator.

S304: The secondary participant determines a local parameter and a loss function.

The secondary participant may train the local distributed learning model of the secondary participant based on data of the secondary participant, update the local parameter and the loss function of the local distributed learning model, and encrypt the local parameter and the loss function based on the public key, to obtain an encrypted local parameter, for example, $\left〚{μ}_{i}^{A}\right〛$, and an encrypted loss function, for example, $\left〚{L}_{A}\right〛$. The symbol $\left〚⋅\right〛$ represents homomorphic encryption.

S305: The secondary participant sends the encrypted local parameter and the encrypted loss function to the primary participant. Correspondingly, the primary participant receives the encrypted local parameter and the encrypted loss function from the secondary participant.

For example, the secondary participant sends the local parameter $\left〚{μ}_{i}^{A}\right〛$ and the loss function $\left〚{L}_{A}\right〛$ to the primary participant.

S306: The primary participant determines a local parameter, an intermediate parameter, and a loss function.

Similarly, the primary participant may train the local distributed learning model of the primary participant based on data of the primary participant, update the local parameter, and encrypt the local parameter based on the public key, to obtain an encrypted local parameter, for example, $\left〚{μ}_{i}^{B}\right〛$, and an encrypted loss function, for example, $\left〚{L}_{B}\right〛$. The primary participant may further determine an intermediate parameter $\left〚{d}_{i}\right〛$ based on the local parameter of the primary participant and the local parameter of the secondary participant. The intermediate parameter $\left〚{d}_{i}\right〛$ may be, for example, $\left〚{μ}_{i}^{A}\right〛 + \left〚{μ}_{i}^{B}\right〛 - {y}_{i}$. The primary participant may further determine a total loss function $\left〚L\right〛$ based on the local parameter $\left〚{μ}_{i}^{A}\right〛$ and the loss function $\left〚{L}_{A}\right〛$ of the secondary participant, the loss function $\left〚{L}_{B}\right〛$, and the like.

S307: The primary participant sends the intermediate parameter to the secondary participant. Correspondingly, the secondary participant receives the intermediate parameter from the primary participant.

For example, the primary participant sends the intermediate parameter $\left〚{d}_{i}\right〛$ to the secondary participant.

S308: The primary participant sends the loss function to the coordinator. Correspondingly, the coordinator receives the loss function from the primary participant.

For example, the primary participant sends the loss function [L] to the coordinator.

S309: The coordinator determines whether to terminate iteration.

For example, the coordinator decrypts the loss function [L] by using a private key, to obtain a decrypted loss function, and determines, based on the decrypted loss function, whether to terminate iteration, which may alternatively be described as determining whether to stop distributed learning model training.

S310: The secondary participant determines an encrypted local gradient.

The secondary participant calculates a local gradient $\left〚\frac{\partial L}{\partial {Θ}_{A}}\right〛$, and adds random noise $\left〚{R}_{A}\right〛$ to obtain the encrypted local gradient, namely $\left〚\frac{\partial L}{\partial {Θ}_{A}}\right〛 + \left〚{R}_{A}\right〛$.

S311: The secondary participant sends the encrypted local gradient to the coordinator. Correspondingly, the coordinator receives the encrypted local gradient from the secondary participant.

The coordinator decrypts the encrypted local gradient by using the private key, to obtain a decryption result, namely $\frac{\partial L}{\partial {Θ}_{A}} + {R}_{A}$.

S312: The coordinator sends the decryption result to the secondary participant. Correspondingly, the secondary participant receives the decryption result from the coordinator.

The secondary participant subtracts the random noise from the decryption result to obtain a decrypted gradient $\frac{\partial L}{\partial {Θ}_{A}}$, and updates the local parameter ${Θ}_{A} = {Θ}_{A} - η \frac{\partial L}{{\partial }_{{Θ}_{A}}}$ based on the decrypted gradient.

S313: The primary participant determines an encrypted local gradient.

The primary participant calculates a local gradient $\left〚\frac{\partial L}{\partial {Θ}_{B}}\right〛$, and adds random noise $\left〚{R}_{B}\right〛$to obtain the encrypted local gradient, namely $\left〚\frac{\partial L}{\partial {Θ}_{B}}\right〛 + \left〚{R}_{B}\right〛$.

S314: The primary participant sends the encrypted local gradient to the coordinator. Correspondingly, the coordinator receives the encrypted local gradient from the primary participant.

The coordinator decrypts the encrypted local gradient by using the private key, to obtain a decryption result, namely $\frac{\partial L}{\partial {Θ}_{B}} + {R}_{B}$.

S315: The coordinator sends the decryption result to the primary participant. Correspondingly, the primary participant receives the decryption result from the coordinator.

Similarly, the primary participant subtracts the random noise from the decryption result to obtain a decrypted gradient $\frac{\partial L}{\partial ΘB}$, and updates the local parameter ${Θ}_{B} = {Θ}_{B} - η \frac{\partial L}{{\partial }_{{Θ}_{B}}}$ based on the decrypted gradient.

In a training process, participants of distributed learning exchange intermediate calculation results. Therefore, in the entire training process, the participants cannot obtain original data of each other, but complete the model training process by exchanging the intermediate results. In this way, local data privacy of the participants is protected while implementing joint training.

In FIG. 3, two participants are used as an example. When there are three or more participants, for a related distributed learning process, refer to the distributed learning process in FIG. 3. Details are not described herein again. Various encryption algorithms, model training methods, or the like may be involved in distributed learning, such as multiparty multi-class distributed learning based on privacy-preserving label sharing and multiparty distributed learning based on secret sharing. This is not specifically limited.

Because a participant may not have all features for execution of distributed learning, the participant needs to perform distributed learning model training jointly with another participant, and needs to determine the another participant in vertical federation. In other words, before a model training process starts, it is necessary to perform feature alignment on all participants, that is, determine a feature used by each vertical federation participant for distributed learning model training. However, currently, each participant is determined through offline negotiation. This results in poor flexibility in determining participants, and cannot meet requirements of some services.

In view of this, embodiments of this application provide a communication method. In the method, each network element may be registered with a second network element. In this way, an initiator (for example, a first network element) of distributed learning may obtain, via the second network element, some network elements (for example, at least one third network element) that meet distributed learning requirements. Then, the first network element may determine a final participant for distributed learning from the obtained at least one third network element, without determining the participant in advance. This implements a mechanism for online determination of distributed participants, and helps improve flexibility in determining participants. In addition, the first network element may further determine a feature used by the participant to participate in distributed learning model training. In this way, a manner for feature alignment of each participant is provided, thereby helping improve flexibility in feature alignment of each participant.

The communication method provided in embodiments of this application may be applicable to the distributed learning scenario in FIG. 2. In addition, the communication method may also be applicable to another similar distributed learning scenario. The following provides examples for description with reference to the accompanying drawings.

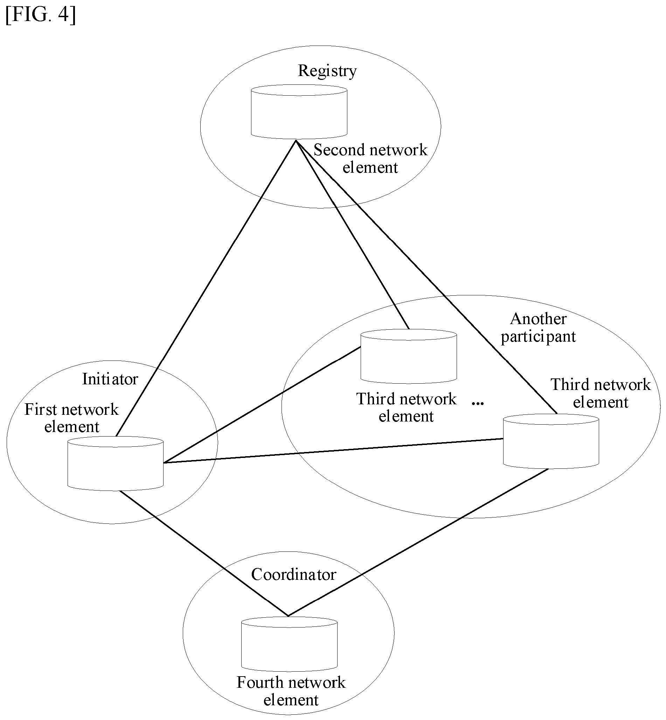

FIG. 4 is a diagram of a distributed learning scenario according to an embodiment of this application. FIG. 4 shows an initiator, another participant, and a registry. Optionally, the scenario further includes a coordinator. Any one of the initiator, the another participant, the registry, and the coordinator may be implemented by using a network element. There may be one or more other participants. This is not limited. Optionally, the registry may also be the coordinator in distributed learning.

In FIG. 4, an example in which the initiator is a first network element, the registry is a second network element, the another participant is all or part of at least one third network element, and the coordinator is a fourth network element is used. The initiator (for example, the first network element) is configured to initiate distributed learning. The registry (for example, the second network element) is configured to register the initiator, the another participant, and the like. The coordinator may assist in distributed learning model training and the like. For an implementation of the network element, refer to the foregoing content of the network element. Repeated parts are not described again.

For example, both the at least one third network element and the first network element may be registered with the second network element. When initiating distributed learning, the first network element may request, from the second network element, a third network element participating in distributed.

A 3GPP standard defines a network data analytics function (network data analytics function, NWDAF)-based intelligent network architecture. The intelligent network architecture aims to collect massive information in a network, and utilize the data by using big data and artificial intelligence technologies (such as vertical federated learning), to output some valuable information to assist an operator in policy formulation and network resource adjustment, thereby improving user experience and reducing network load.

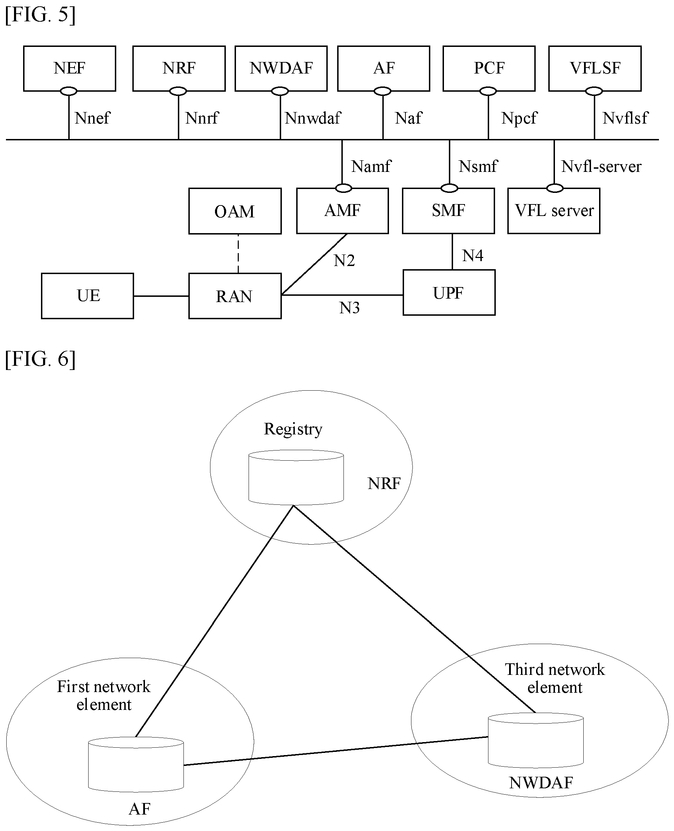

FIG. 5 is a diagram of the NWDAF-based intelligent network architecture according to an embodiment of this application, and may also be considered as a diagram of another distributed learning scenario according to an embodiment of this application. FIG. 5 shows an NWDAF, a vertical federated learning server (VFL Server), a vertical federated learning support function (vertical federated learning support function, VFLSF), an application function (application function, AF), a network element (network function, NF), UE, and a RAN. For example, the NF includes a network exposure function (network exposure function, NEF), a network repository function (network repository function, NRF), the network data analytics function (network data analytics function, NWDAF), a policy control function (policy control function, PCF), an access and mobility management function (access and mobility management function, AMF), a session management function (session management function, SMF), an operations, administration and management (operations, administration and management, OAM) (which may also be referred to as a network management system), and a user plane function (user plane function, UPF).

Any one of the NF, the UE, or the RAN in FIG. 5 is, for example, used as an example of the first network element in FIG. 4. At least one of the NF, the UE, or the RAN in FIG. 5 may be used as an example of the at least one third network element in FIG. 4. The NRF, the NEF, or the VFLSF in FIG. 5 may be, for example, used as an example of the second network element in FIG. 4. In addition, optionally, the VFL server in FIG. 5 may be used as a coordinator of distributed learning. For example, the VFLSF may be a new network element, or may be deployed in an existing network element, for example, deployed in a network element such as the NRF, the NEF, the NWDAF, or the AF.

The NWDAF has functions such as data collection, model training, data analysis, and model inference, and may be configured to: collect related data from another network element, a third-party server, a terminal device, or a network management system, perform data analysis or model training based on the related data, and provide a data analysis result for the network element, the third-party service server, the terminal device, or the network management system, or provide a trained model for another data analytics function network element. The NWDAF can be classified into an analytics logical function (analytics logical function, AnLF) and a model training logical function (model training logical function, MTLF) based on a function. The AnLF is a logical function in the NWDAF, and is configured to perform model inference, derive an analysis result (that is, derive a statistical or predicted analysis result based on a request from an analysis consumer), and expose the analysis result. The MTLF is a logical function in the NWDAF, and is configured to train a model and expose a training service (for example, provide a trained model). One NWDAF may include only an AnLF, may include only an MTLF, or may include both an AnLF and an MTLF.

Table 2 shows analysis results provided by the NWDAF and data required to be collected for the corresponding analysis results provided by the NWDAF.

**Table 2**

| Analysis result | Data required to be collected |
|---|---|
| Service experience analysis | AF/UE: service identifier, service experience, and other service-related information |
| | OAM (RAN): signal received power, signal received quality, and the like |
| Network element load analysis | NRF: network element resource usage |
| | OAM: UE speed/orientation (such as minimization drive test data (minimization drive test, MDT) data of the UE) |
| | Third-party application: path, destination, arrival time, and the like |
| Multi-access edge computing (multi-access edge computing, MEC) service experience analysis | AF/UE: UE identifier, UE location, application identifier, application location, and uplink/downlink transmission performance data |

As shown in Table 2, the NWDAF may provide a service experience analysis result. To provide the analysis result, the NWDAF needs to collect service-related data such as the service identifier and the service experience from the AF/UE, and collect data such as the signal received power and the signal received quality from the OAM. The NWDAF may train an AI model based on the collected data, and then obtain an inferred analysis result based on the AI model, for example, obtain predicted service experience in a future time period. The NWDAF may provide a network element load analysis result. To provide the analysis result, the NWDAF needs to collect information related to the network element resource usage from the NRF, collect information such as the UE speed/orientation from, and collect data such as the path, the destination, and the arrival time of the UE from the third-party application. The NWDAF may train an AI model based on the collected data, and obtain an inferred analysis result based on the AI model, for example, obtain a predicted network element load status in a future time period. The NWDAF may further provide MEC service experience analysis. To provide the analysis result, the NWDAF needs to collect the UE identifier, the UE location, the application identifier, the application location, the uplink/downlink transmission performance data, and the like from the AF or the UE, train an AI model based on the data, and obtain an inferred analysis result based on the AI model, for example, obtain predicted MEC service experience analysis in a future time period.

The AF is configured to transfer a requirement of an application side for a network side, for example, a quality of service (quality of service, QoS) requirement or a user state event subscription. The AF may be a third-party functional entity or an application server deployed by an operator.

The VFLSF is responsible for registration and discovery of a participant in vertical federated learning. The VFLSF may be independently deployed, or may be deployed in a network element such as the NRF, the NEF, the NWDAF, or the AF.

For example, the VFL server may be used as the coordinator, and is responsible for maintenance of a vertical federation process, authorization, admission, and removal of a federated learning member, and other functions. Optionally, the VFL server is responsible for work such as encryption key distribution and intermediate information decryption.

The NEF is configured to: provide a framework, authentication, and an interface that are related to network capability exposure, and transfer information between a network function of a 5G system and another network function.

The NRF is configured to provide a capability of registering and discovering a network element in a network.

The PCF is mainly responsible for generation and update of a UE access policy and a QoS flow control policy, and the like.

The AMF is mainly responsible for management of user access, mobility, and the like, mainly including user registration, reachability, mobility management, N1/N2 interface signaling transmission, access authentication, authorization, and the like.

The SMF is configured to: manage creation, modification, release, and the like of a user protocol data unit (protocol data unit, PDU) session, allocate and manage an IP address, select and control a UPF, and the like.

The OAM is configured to provide a system or network fault indication, performance monitoring, security management, diagnosis, configuration, user configuration, and the like.

As a network function network element of a 5G core network, the UPF is responsible for core network processing functions such as data traffic processing and routing and forwarding.

Nnef, Nnrf, Nnwdaf, Naf, Npcf, Nvflsf, Namf, Nsmf, and Nvfl-server in FIG. 5 are service-based interfaces provided by the NEF, the NRF, the NWDAF, the AF, the PCF, the VFLSF, the AMF, the SFM, and the VFL-Server, and are configured to invoke corresponding service-based operations. In FIG. 5, N2 is a communication interface between the RAN and a core network control plane (for example, the AMF); N3 is a communication interface between the RAN and the UPF, and is configured to transmit user data; and N4 is a communication interface between the SMF and the UPF, and is configured to perform policy configuration and the like on the UPF.

FIG. 6 is a diagram of a distributed learning scenario according to an embodiment of this application. In FIG. 6, an example in which a first network element is an AF, a second network element is an NRF, and a third network element is an NWDAF is used. Actually, specific implementations of the first network element, the second network element, and the third network element are not limited. In this case, the AF may be used as an initiator of distributed learning model training, the NRF may be used as a registry of distributed learning model training, and the NWDAF may be used as a participant in distributed learning model training.

The following describes, in detail with reference to the accompanying drawings, the communication method provided in embodiments of this application.

Steps shown by using dashed lines in embodiments of this application are optional steps. In addition, in embodiments of this application, a first network element is, for example, the primary participant or the secondary participant in FIG. 2, the initiator or the first network element in FIG. 4, or the first network element or the AF in FIG. 6. A second network element is, for example, the registry or the second network element in FIG. 4, the VFLSF, the NRF, or the NEF in FIG. 5, or the second network element or the NRF in FIG. 6. A third network element is, for example, the primary participant or the secondary participant in FIG. 2, the another participant or any third network element in FIG. 4, any network element in FIG. 5, or the third network element or the NWDAF in FIG. 6. A coordinator is, for example, the coordinator in FIG. 2, or the coordinator or the fourth network element in FIG. 4. These network elements may have other names, or with continuous evolution of a standard, names of these network elements may change. This is not limited.

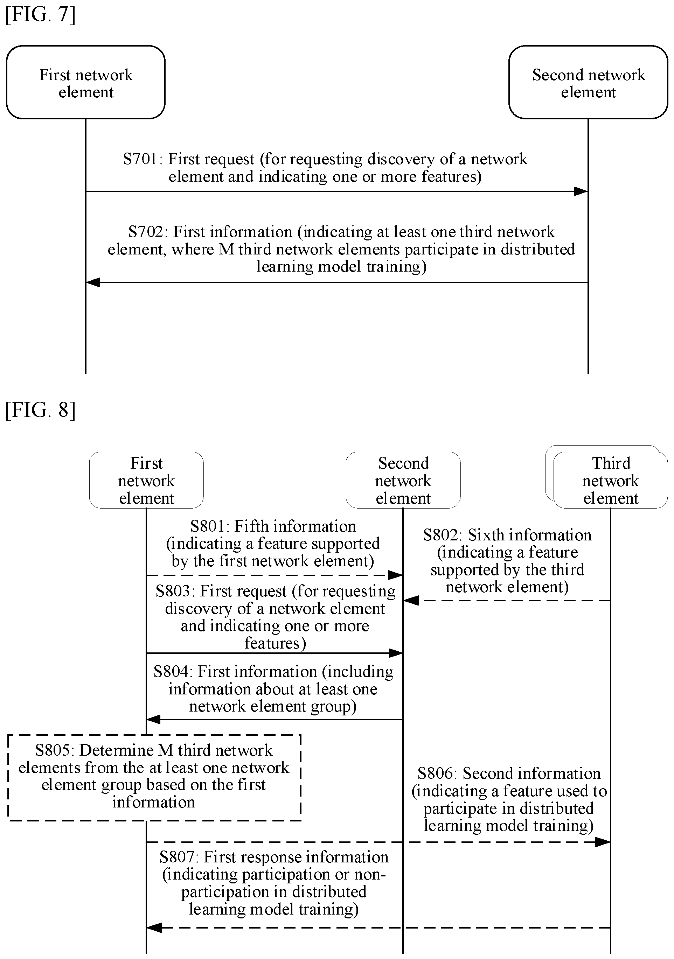

FIG. 7 shows a communication method according to an embodiment of this application. The following describes steps in FIG. 7.

S701: The first network element sends a first request to the second network element. Correspondingly, the second network element receives the first request from the first network element.

The first network element may directly send the first request to the second network element, or the second network element may send the first request to the second network element via another network element (which may be one or more network elements). This is not limited. For example, if the first network element is the AF, and the second network element is the NRF, the AF may send the first request to the NRF via the NEF. Alternatively, if the first network element is the NWDAF, and the second network element is the NRF, the NWDAF may directly send the first request to the NRF. Alternatively, if the first network element is the NWDAF, and the second network element is the AF, the NWDAF may send the first request to the AF via the NEF.

The first network element may obtain a task. The task may be obtained from a terminal device corresponding to a user, or may be obtained from another network element. This is not limited. The first network element may determine, based on a requirement of the task, that a model (referred to as a distributed learning model) used to process the task needs to be trained in a distributed learning manner, and determine a plurality of features used to train the distributed learning model. For example, the first network element may determine, based on a first correspondence, a plurality of features corresponding to the task in the first correspondence. The first correspondence indicates features corresponding to different tasks. Alternatively, the first network element may determine, based on a second correspondence, features corresponding to a plurality of pieces of data corresponding to the task in the second correspondence. The first correspondence indicates data corresponding to different tasks.

For example, the first network element obtains the task, where the task is used to predict service experience. The first correspondence indicates that a feature corresponding to the task used to predict the service experience includes a RAT type, RSRP, RSRQ, a RAN throughput, service experience, a location, an average throughput, and an average packet delay. In this way, the first network element may determine, based on the task, that the plurality of features include the RAT type, the RSRP, the RSRQ, the RAN throughput, the service experience, the location, the average throughput, and the average packet delay.

Alternatively, the first network element may obtain, from another network element, the plurality of features used to train the distributed learning model. The plurality of features may be understood as features corresponding to data required for training the distributed learning model, or may be understood as that training of the distributed learning model depends on these features.

After the first network element determines the plurality of features, the first network element may determine, as one or more features, a feature other than a feature that can be provided (or supported) by the first network element in the plurality of features. The feature that can be provided (or supported) by the first network element may be a feature that can be directly obtained by the first network element, and may further include a feature corresponding to data that can be collected by the first network element from another network element. The one or more features are for distributed learning model training. The one or more features may also be understood as features (expected all features) expected by the first network element, or may be understood as all features that the first network element expects another participant to provide for distributed learning model training.

Because the first network element cannot support the one or more features, the network element configured to provide the one or more features needs to be discovered, so that the first network element and the discovered network element can jointly perform distributed learning model training. In this embodiment of this application, the first network element may send, to the second network element, the first request used to request discovery of the network element. There may be one or more network elements requested to be discovered. This is not limited. The first request indicates (or includes) the one or more features. A feature used by the network element that the first request is used to request discovery to participate in distributed learning model training includes the one or more features.

The first request may include K bits, where K is a positive integer, and the K bits are used to request discovery of the network element, that is, the first request is used to request discovery of the network element by using a separate bit. Alternatively, the second network element determines, based on a name of the first request, information (for example, a name) about a service operation corresponding to the first request, or the like, that the first request is used to request discovery of the network element. For example, the second network element is the NRF. If the first request is an Nnrf_NF Discovery_Request service operation, and the first request is sent to the NRF, the NRF determines, based on a name of the service operation, that the first network element intends to discover the network element. In this case, the first request does not need to include a separate bit indicating discovery of the network element. This helps reduce a quantity of bits occupied by the first request. Alternatively, the one or more features are used to request discovery of the network element. In this case, the first request does not need to include a separate bit to request discovery of the network element. This reduces bit overheads of the first request. In other words, the first request indicates the one or more features, indicating that the first request is used to request discovery of the network element.

In the following, the first request may indicate any one of the following A1 to A5, to indicate the one or more features. The following describes content of any one of A1 to A5.

A1: The first request includes the one or more features, and the one or more features are, for example, at least one of the location, the average throughput, or the average packet delay.

A2: The first request includes an identifier (feature identifier, feature ID) or identifiers of the one or more features, and the identifier or identifiers of the one or more features indicate the one or more features.

An identifier of a feature (for example, an identifier of one feature in the one or more features) may be an identifier (which may also be referred to as a number, a sequence number, an index, or the like) allocated to the feature. In a possible implementation, the identifier of the feature (which may be referred to as a feature identifier) in the one or more features may be understood as an anonymous feature. Participants (for example, the first network element and another participant) negotiate a meaning of the feature identifier in advance, and therefore can understand a meaning of an identifier of a feature registered by each other. Optionally, the second network element cannot determine, based on the feature identifier, the feature specifically represented by the feature identifier. In this way, the feature supported by each participant can be avoided from being leaked to another party other than participants in distributed learning. In other words, the identifier of the feature can be understood by the participants in distributed learning model, but cannot be understood by the second network element. In this way, security of the feature is ensured. In another possible implementation, the identifier of the feature may be non-anonymous, and the participants do not need to negotiate the identifier of the feature in advance. This is not limited in embodiments of this application.

For example, if an identifier of a feature is 1234, it indicates that the feature is the average throughput; or if an identifier of a feature is 1235, it indicates that the feature is the average packet delay.

A3: The first request includes one or more event identifiers (Event IDs). Each event identifier is used to determine data (a list of event IDs of the local data for training) for model training. The event identifier in embodiments of this application may be preconfigured or predefined, for example, predefined by using a protocol, or may be determined by the first network element through negotiation with at least one third network element and the like. This is not limited.

One event identifier may correspond to (or may be used to determine) at least one feature. Correspondingly, one event identifier in the one or more event identifiers corresponds to all or part of the one or more features. For example, if an event identifier is quality of service flow monitoring (QoS Monitoring), a feature corresponding to the event identifier includes at least one of an uplink packet delay (UL packet delay), a downlink packet delay (DL packet delay), or a round-trip packet delay (round-trip packet delay).

For example, the first request includes {event ID 1, event ID 2, event ID 4, event ID 5, feature ID 3, feature ID 4}, that is, the one or more features include at least one feature corresponding to an event 1, at least one feature corresponding to an event 2, at least one feature corresponding to an event 4, at least one feature corresponding to an event 5, a feature 3, and a feature 4.

A4: The first request includes one or more network element types (NF type(s)) and/or one or more network element set identifiers (NF Set ID(s)). The first request may indicate the one or more features by using the one or more network element types or the one or more network element set identifiers.

The one or more network element types or one or more network element sets represent a data source or data sources from which data can be collected, where the data corresponds to the feature. Therefore, indicating the one or more network element types or the one or more network element sets is equivalent to indicating the one or more features.

For example, one NF type or one NF set ID may correspond to one or more event IDs, and one event ID may correspond to one or more features. For example, if the NF type is the SMF, an event ID that can be provided by the SMF includes, for example, quality of service flow monitoring, an uplink path change (UP path change), and a quality of service flow identifier (QoS flow identifier, QFI) configuration (allocation). A feature corresponding to quality of service flow monitoring includes, for example, the uplink packet delay, a downlink data delay, or the round-trip packet delay.

In a possible implementation, in addition to indicating the one or more features, the first request may further indicate the one or more network element types (NF type(s)). For example, the first request includes an identifier or identifiers of the one or more network element types, and the identifier or identifiers of the one or more network element types indicate the one or more network element types. In this implementation, each feature in the one or more features is a feature corresponding to one of the one or more network element types. Certainly, when the one or more features pass through the one or more network element types in A4, the first request may indicate the one or more network types, to indicate both the one or more features and the one or more network element types.

When the first request indicates the one or more features and the one or more network element types, the first request may alternatively be described as indicating the one or more network element types and a feature corresponding to each of the one or more network element types. This may be understood as that the first network element expects the one or more features to be obtained from some specific network element types, or may be understood as that the first network element requests the one or more features based on a network element type as a granularity.

For example, if the first request indicates {NWDAF: (event ID 1, event ID 2, event ID 4, event ID 5), AF: (feature ID 3, feature ID 4)}, it indicates that one or more NWDAFs that the first network element expects to discover support features (event ID 1, event ID 2, event ID 4, and event ID 5), and one or more AFs that the first network element expects to discover support features {feature ID 3, feature ID 4}.

A5: The first request includes one or more capability types (capability types). Each capability type corresponds to at least one feature. Equivalently, the one or more capability types indicate the one or more features.

For example, if the first request includes active participation (active participant), and a feature corresponding to the capability is a feature 1 and a feature 2, it indicates that the one or more features include the feature 1 and the feature 2.

In a possible implementation, in addition to indicating the one or more features, the first request may further indicate a VFL capability type. This case is applicable to a case in which the first request indicates the one or more features in any one of the foregoing manners A1 to A4. Optionally, in this case, the first request may indicate the one or more capability types and a feature corresponding to each capability type. Certainly, when the one or more features pass through the one or more network element types in A4, the first request may indicate the one or more network element types, to indicate both the one or more features and the one or more network element types.

For example, if the first request indicates that the capability type includes active participation, and indicates that the feature corresponding to active participation is the feature 3 and the feature 4, it indicates that the one or more features include the feature 3 and the feature 4.

A1 or A2 may be considered that the first request indicates a fine-grained feature requested to be discovered, that is, the one or more features in this case may be considered as a fine-grained feature or fine-grained features. A3 to A5 may be considered that the first request indicates a coarse-grained feature requested to be discovered, that is, the one or more features in this case may be considered as a coarse-grained feature or coarse-grained features.

S702: The second network element sends first information to the first network element. Correspondingly, the second network element receives the first information from the first network element. The first information indicates the at least one third network element, where M third network elements participate in distributed learning model training. M is a positive integer, for example, 1, 2, or 3. This is not limited.

After receiving the first request, the second network element may determine (or sense or discover) the at least one third network element based on the first request. The second network element may be preconfigured or predefined with information about the at least one third network element, or may obtain information about the at least one third network element from the at least one third network element. This is not specifically limited. Certainly, in addition to determining the at least one third network element, the second network element can further determine another network element such as the first network element. This is not limited.

Information about one third network element in the information about the at least one third network element may be an identifier, an address, or the like of the one third network element. Optionally, the information about the one third network element further includes a network element type, a network element capability, and/or the like of the one third network element. This is not specifically limited. The network element capability of the one third network element indicates, for example, that the third network element has at least one of a distributed learning capability and distributed learning model training or inference. The distributed learning capability may be, for example, a vertical federated learning capability. The vertical federated learning capability includes a supported vertical federated learning capability type, for example, a primary participant in vertical federated learning, a secondary participant in vertical federated learning, a coordinator in vertical federated learning, or a time window supported by vertical federated learning. The time window is, for example, a time period for vertical federated learning, a time period for collecting data for vertical federated learning, or a time period for producing data for vertical federated learning. The identifier of the one third network element may be an address of the third network element, may be an identifier allocated to the third network element, may be obtained by performing an operation on the address of the third network element, or may be a name of the third network element, or the like. The address of the third network element is, for example, an internet (internet protocol, IP) address of the third network element or a fully-qualified network domain name (fully-qualified domain name, FQDN) of the third network element.

Because the second network element can determine the at least one third network element, the second network element may indicate the at least one third network element to the first network element. For example, the second network element may send the first information to the first network element, where the first information indicates the at least one third network element. The first information may also be considered as a response message for the first request. The at least one third network element may be understood as a third network element that satisfies the first request, or may be understood as a network element discovered by the second network element based on the first request.

For example, the first information includes the information about the at least one third network element, for example, an identifier of the at least one third network element, and the information about the at least one third network element is equivalent to indicating the at least one third network element.

In addition to indicating the at least one third network element, optionally, the first information may further indicate a feature corresponding to the at least one third network element. The feature corresponding to the at least one third network element includes a feature corresponding to each third network element in the at least one third network element. The feature corresponding to the at least one third network element may be a feature in the one or more features indicated in the first request, or the feature corresponding to the at least one third network element may include the one or more features, and include a feature other than the one or more features. For example, the feature corresponding to the at least one third network element includes a feature supported by each third network element in the at least one third network element. This is not specifically limited.

The following uses a feature corresponding to one third network element in the at least one third network element as an example to describe content of the feature corresponding to the at least one third network element.

B1: A feature corresponding to one third network element may be a feature supported by the third network element, for example, is all features supported by the third network element. The feature supported by the third network element is, for example, all features that can be provided by the third network element.

For example, if all the features supported by the third network element include the feature 1, the feature 2, and the feature 3, the feature corresponding to the third network element includes the feature 1, the feature 2, and the feature 3.

In B1, features corresponding to any two third network elements in the at least one third network element may overlap, or may not overlap. This is not specifically limited. That features corresponding to any two third network elements overlap means that features corresponding to at least two third network elements include a same feature, or include an identical feature. That features corresponding to any two third network elements do not overlap means that features corresponding to any two third network elements are different.

For example, the at least one third network element includes a third network element A and a third network element B. A feature corresponding to the third network element A includes the feature 1, the feature 2, and the feature 3, and a feature corresponding to the third network element B includes the feature 1 and the feature 4. Because the feature 1 corresponding to the third network element A is the same as the feature 1 corresponding to the third network element B, it may be considered that the feature corresponding to the third network element A overlaps the feature corresponding to the third network element B. Alternatively, the at least one third network element includes a third network element C and a third network element D. A feature corresponding to the third network element C includes the feature 1 and the feature 2, and a feature corresponding to the third network element D includes the feature 4 and a feature 5. Because the features corresponding to the third network element C are all different from the features corresponding to the third network element D, it may be considered that the features corresponding to the third network element C do not overlap the features corresponding to the third network element D.

In B1, the feature corresponding to the at least one third network element includes the one or more features indicated by the first request. Optionally, the feature corresponding to the at least one third network element may further include another feature in addition to the one or more features.

B2: A feature corresponding to one third network element is a feature supported by the third network element, and is a feature in the one or more features indicated by the first request. In this case, the feature corresponding to the one third network element is an intersection set of the feature supported by the third network element and the one or more features.

For example, if the one or more features include the feature 1 and the feature 2, and all features supported by the third network element include the feature 1, the feature 2, and the feature 3, the feature corresponding to the third network element is the feature 1 and the feature 2.

In B2, features corresponding to any two third network elements in the at least one third network element may overlap, or may not overlap. This is not specifically limited.

In B2, the feature corresponding to the at least one third network element belongs to the one or more features.

B3: A feature corresponding to one third network element is a feature used by the third network element to participate in distributed learning model training. The feature used by the third network element to participate in distributed learning model training may be understood as a feature determined by the second network element and used by the third network element to participate in distributed learning model training.

For example, the one or more features include the feature 1, the feature 2, the feature 3, and the feature 4, the at least one third network element includes a third network element A and a third network element B, the third network element A supports the feature 1, the feature 2, and the feature 3, and the third network element B supports the feature 3, the feature 4, and a feature 5. The second network element determines that the third network element A uses the feature 1 and the feature 2 to perform distributed learning model training and the third network element B uses the feature 3 and the feature 4 to perform distributed learning model training. Therefore, for the third network element A, the second network element sends only the feature 1 and the feature 2 to the first network element, which may alternatively be described as that the second network element indicates, to the first network element, the feature 1 and the feature 2 corresponding to the third network element A; and for the third network element B, the second network element sends only the feature 3 and the feature 4 to the first network element, which may alternatively be described as that the second network element indicates, to the first network element, the feature 3 and the feature 4 corresponding to the third network element B. A combination of features of the third network element A and the third network element B forms the one or more features, and there is no intersection set between the features of the third network element A and the third network element B.

In this case, a feature corresponding to one third network element is all or part of features in an intersection set of a feature supported by the third network element and the one or more features.

In B3, features corresponding to any two third network elements in the at least one third network element may overlap, or may not overlap. This is not specifically limited.

Optionally, in B3, the feature corresponding to each third network element in the at least one third network element may be a feature in the one or more features, and features corresponding to any two third network elements in the at least one third network element do not overlap. In this optional manner, it is equivalent to that the at least one third network element determined by the second network element for the first network element is a third network element that can be directly configured to participate in distributed learning model training, and the first network element does not need to perform selection from the at least one third network element.

The following describes, by using an example, specific content of the first information when the first information further indicates the feature corresponding to the at least one third network element.

C1: The first information includes the identifier of the at least one third network element and the feature corresponding to each third network element in the at least one third network element. For content of a feature corresponding to one third network element, refer to the foregoing content of a feature corresponding to one third network element. In this way, the first network element can intuitively determine the feature corresponding to the at least one third network element.

For example, if the first information includes {AF 1: feature 1, feature 2, and feature 3, UE 2: feature 4 and feature 5, AMF 1: feature 1, feature 5, and feature 6}, it indicates that the at least one third network element indicated by the first information includes the AF 1, the UE 2, and the AMF 1, a feature corresponding to the AF 1 includes the feature 1, the feature 2, and the feature 3, a feature corresponding to the UE 2 includes the feature 4 and the feature 5, and a feature corresponding to the AMF 2 includes the feature 1, the feature 5, and the feature 6.

C2: The first information includes information about at least one network element group (group), information about each network element group in the at least one network element group includes an identifier of a network element included in the network element group, and a feature corresponding to each network element group includes the one or more features. Optionally, features corresponding to any two network elements in each network element group in the at least one network element group do not overlap, or certainly, features corresponding to any two network elements may overlap.

The at least one network element group includes the at least one third network element. Correspondingly, one network element group in the at least one network element group includes all or part of the at least one third network element. Equivalently, the second network element groups the at least one third network element, so that the first network element subsequently selects a network element configured to participate in distributed learning model training.

Optionally, the information about each network element group further includes a feature corresponding to the network element group, and/or the information about each network element group further includes an identifier of the network element group. The feature corresponding to the at least one network element group is the feature corresponding to the at least one third network element. In addition, a feature corresponding to one network element group includes the one or more features.

For example, if the first information includes {group 1: VFL client 1: event ID 1, event ID 4; VFL client 2: event ID 2, event ID 5; VFL client 3: feature ID 3, feature ID 4} and {group 2: VFL client 4: event ID 1, event ID 2, event ID 4, event ID 5 ; VFL client 5: feature ID 3; VFL client 6: feature ID 4}, the first information indicates information about two network element groups (namely the network element group 1 and the network element group 2).

The network element group 1 includes the VFL client 1, the VFL client 2, and the VFL client 3. A feature corresponding to the VFL client 1 includes the feature corresponding to the event 1 and the feature corresponding to the event 4. A feature corresponding to the VFL client 2 includes the feature corresponding to the event 2 and the feature corresponding to the event 5. A feature corresponding to the VFL client 3 includes the feature 3 and the feature 4. In this case, a feature corresponding to the network element group 1 includes the feature corresponding to the VFL client 1, the feature corresponding to the VFL client 2, and the feature corresponding to the VFL client 3. The network element group 2 includes the VFL client 4, the VFL client 5, and the VFL client 6. A feature corresponding to the VFL client 4 includes the feature corresponding to the event 1, the feature corresponding to the event 2, the feature corresponding to the event 4, and the feature 5 corresponding to the event 5. A feature corresponding to the VFL client 5 includes the feature 3, and the feature 4 that corresponds to the VFL client 6. In this case, a feature corresponding to the network element group 2 includes the feature corresponding to the VFL client 4, the feature corresponding to the VFL client 5, and the feature corresponding to the VFL client 6.

In a possible implementation, when the first request further indicates the one or more network element types, a network element type of the at least one third network element may belong to the one or more network element types, and the feature corresponding to each third network element in the at least one third network element belongs to the one or more features. If the first information is the information shown in C2, a network element type corresponding to the at least one network element group belongs to the one or more network element types. For example, the network element type corresponding to the at least one network element group is one of the one or more network element types. This is not specifically limited.

In a possible design, after the second network element sends the first information to the first network element, the first network element may use the at least one third network element as another participant participating in distributed model learning training. In this case, the M third network elements are all of the at least one third network element.

For example, if the first information does not indicate the feature corresponding to the at least one third network element, the first network element may further negotiate with each third network element in the at least one third network element about the feature supported by each third network element.

Alternatively, if the first information further indicates the feature corresponding to the at least one third network element, the first network element may determine that the feature corresponding to the at least one third network element is a feature for participating in distributed model learning training.

Alternatively, if the first information further indicates the feature corresponding to the at least one third network element, and the first request indicates the coarse-grained feature requested to be discovered (for example, the first request indicates the one or more features in the manners in the foregoing A3 to A5 (for example, the one or more features indicated by the first request may be the event ID, the NF type(s), the NF set ID(s), or the capability type)), the first network element may further negotiate with each third network element in the at least one third network element about the feature supported by each third network element. Optionally, the first network element may negotiate with each third network element in the at least one third network element about a feature of a finer granularity for distributed model training, and the like.

In another possible implementation, the first network element determines the M third network elements from the at least one third network element based on the first information. In this case, the M third network elements may be all of the at least one third network element, or may be a part of the at least one third network element. This is not specifically limited. The M third network elements may be understood as network elements that are determined by the first network element to participate in distributed learning model training.

Different content of the first information indicates different manners for determining the M third network elements. The following separately describes the manners.

D1: When the first information further indicates the feature corresponding to the at least one third network element, the first network element may directly determine, based on the first information, the feature corresponding to the at least one third network element.

When the first information indicates the information about the at least one third network element and the feature corresponding to each third network element in the at least one third network element, the first network element may determine, from the at least one third network element, the M third network elements whose corresponding features include the one or more features, that is, determine the M third network elements participating in distributed learning model training.

Optionally, when a feature corresponding to one third network element in the at least one third network element is a feature used by the third network element to participate in distributed learning model training, the first network element may directly determine the at least one third network element as the M third network elements, so that a processing workload of the first network element can be reduced.

Alternatively, the first network element may determine a plurality of candidate network element groups from the at least one third network element, where each candidate network element group includes all or part of the at least one third network element, and a feature corresponding to each candidate network element group includes the one or more features. In addition, the first network element may determine one candidate network element group from the plurality of candidate network element groups, where a network element included in the determined candidate network element group is the M third network elements.

The determined candidate network element group (that is, a candidate network element group corresponding to the M third network elements) may be a network element group with a minimum sum of distances from the first network element. This helps shorten communication duration. Alternatively, the determined candidate network element group may be a network element group with a small overall load. This helps implement load balancing of a communication system. The determined candidate network element group may be a network element group with the best communication quality with the first network element. This helps improve efficiency of distributed learning model training.

D2: When the first information includes the information about the at least one network element group, the first network element may directly select one network element group from the at least one network element group, where a network element included in the selected network element group is the M third network elements. For content of the selected network element group, refer to the foregoing content of the determined candidate group. Details are not described herein again.

D3: When the first information indicates only the at least one third network element (which may be understood as that the first information does not indicate the feature corresponding to the at least one third network element), the first network element may request, from the at least one third network element, the feature corresponding to the at least one third network element, and then determine the M third network elements based on the feature corresponding to the at least one third network element.

For example, the first network element sends third information respectively to the at least one third network element. By analogy, the first network element sends at least one piece of third information in total. The third information that is sent to one of the at least one third network element is used to request the third network element to feed back a feature corresponding to the third network element. For a meaning of the feature corresponding to the third network element, refer to the foregoing content of the feature corresponding to the third network element, and is not described herein again. In this way, the at least one third network element may send fourth information respectively to the first network element. By analogy, the first network element receives at least one piece of fourth information in total. The fourth information that is received from one of the at least one third network element indicates a feature corresponding to the third network element.

In D3, for a manner for determining the M third network elements, refer to the content of determining the M third network elements in D1. Repeated parts are not described again.

When determining the M third network elements, optionally, the first network element may further determine a feature used by each third network element in the M third network elements to participate in distributed learning model training. The feature used by each third network element to participate in distributed learning model training may be all or part of a feature corresponding to each third network element.

In a possible design, the first network element may send second information respectively to the M third network elements. By analogy, the first network element sends M pieces of second information in total. The first network element may directly send the second information to the M third network elements. Alternatively, the first network element may send the second information to the M third network elements via the coordinator (for example, the fourth network element). Alternatively, if the first network element serves as both the initiator and the coordinator, the first network element may directly send the second information to the M third network elements. The second information that is sent to one of the M third network elements indicates a feature used by the third network element to participate in distributed learning model training. Optionally, the feature used to participate in distributed learning model training indicates that the third network element participates in distributed learning model training. Alternatively, the second information may further indicate the third network element to participate in distributed learning model training.

Further, optionally, the M third network elements each may send a first response message to the first network element. By analogy, the first network element receives M first response messages in total. A first response message sent by one third network element to the first network element indicates that the third network element participates in distributed learning model training (which is alternatively described as agreeing to participate in distributed learning model training) or does not participate in distributed learning model training (which is alternatively described as refusing to participate in distributed learning model training). When the second information received by the one third network element further indicates the feature used by the third network element to participate in distributed learning model training, a first response message sent by the third network element may also be specifically understood as agreeing to participate in distributed learning model training by using the feature used to participate in distributed learning model training or refusing to perform distributed learning model training by using the feature used to participate in distributed learning model training.

This embodiment of this application provides a mechanism for negotiating (or aligning) network elements participating in distributed learning model training, so that the first network element can flexibly discover, via the second network element, another participant participating in distributed learning model training. In addition, the first network element and the determined M third network elements may further negotiate or align features used to participate in distributed learning model training, to ensure accuracy of subsequent distributed learning model training.

The following uses an example in which the first request indicates the one or more features. With reference to a diagram of a communication method shown in FIG. 8, the following describes the communication method in FIG. 7 by using an example. A quantity of the at least one third network element in FIG. 8 may be any quantity. This is not limited.

S801: The first network element sends fifth information to the second network element. Correspondingly, the second network element receives the fifth information from the first network element. The fifth information indicates a feature supported by the first network element.

The fifth information may be understood as being used to request to register the first network element. The fifth information may also be referred to as a registration request (register request) of the first network element. For content of the feature supported by the first network element, refer to the foregoing content of the feature corresponding to the third network element. Details are not described herein again. For example, the fifth information indicates a name (Feature name(s)) and/or an identifier of the feature supported by the first network element. In addition to the feature supported by the first network element, optionally, the fifth information further indicates at least one of an identifier, a network element type, and a network element capability (capability) of the first network element, a network element type (NF Type(s)) corresponding to the first network element, or a network element set identifier (NF Set ID(s)) corresponding to the first network element. For content of the identifier of the first network element, refer to the foregoing identifier of the third network element. Details are not described herein again. The type of the first network element indicates, for example, that the first network element is the AF. The network element capability of the first network element indicates, for example, that the network element has at least one of a distributed learning capability and distributed learning model training or inference. The network element set identifier is an identifier of a network element from which the first network element supports obtaining data.

The following describes the content of the fifth information by using an example.

G1: The fifth information includes the network element type of the first network element, the network element set identifier corresponding to the first network element, the network element type corresponding to the first network element, and an event identifier corresponding to the feature supported by the first network element.

For example, if the first network element is the NWDAF, and the network element type corresponding to the first network element includes the AMF, it indicates that the NWDAF supports collecting data from the AMF. Alternatively, if the first network element is the NWDAF, and the network element type corresponding to the first network element includes the SMF, it indicates that the NWDAF supports collecting data from the SMF. In addition, if the first network element is the NWDAF, and the event ID is a location report (location report), it indicates that the NWDAF supports collecting UE location information from the AMF. For another example, if the event ID is a change of a radio access type (Change of RAT Type), it indicates that the NWDAF supports collecting RAT type change information from the AMF. For another example, if a network element corresponding to a network element set identifier 1 corresponding to the first network element includes an AMF 1, an AMF 2, and an AMF 3, it indicates that the first network element supports collecting data from the AMF 1, the AMF 2, and the AMF 3.

G2: The fifth information includes the name of the feature and the identifier of the feature. For a meaning of the identifier of the feature, refer to the foregoing content of the identifier of the feature in FIG. 7. Repeated parts are not described again. The name of the feature is, for example, service experience, a location, an average throughput, and an average packet delay. For example, if the feature ID is 1234, it indicates that the feature is the average throughput; or if the feature ID is 1235, it indicates that the feature is the average packet delay.

G1 or G2 may be applicable to the first network element being any type of network element such as the NWDAF, a 5GC NF (such as the AMF, the SMF, the UPF, or the PCF), or the AF. This is not limited.

After receiving the fifth information, the second network element may store the fifth information, and send a first registration response to the first network element. The first registration response indicates that the first network element is successfully registered or the first network element is not successfully registered.

When the first network element has been registered with the second network element before, when the first network element may not need to be registered with the second network element, or in another case, step S801 may not need to be performed. In other words, S801 is an optional step, and is shown by using a dashed line in FIG. 8.

S802: At least one third network element sends sixth information respectively to the second network element. Correspondingly, the second network element receives the sixth information respectively from the at least one third network element.

One piece of sixth information indicates a feature supported by a third network element corresponding to the sixth information. The sixth information may be understood as being used to request to register the third network element. For example, the sixth information indicates a name and/or an identifier of the feature supported by the third network element. In addition to indicating the feature supported by the third network element corresponding to the one piece of sixth information, optionally, the one piece of sixth information further indicates the identifier of the third network element. In addition to indicating the feature supported by the third network element, optionally, the sixth information further indicates at least one of the identifier, a network element type, and a capability of the third network element, a network element type corresponding to the third network element, or a network element set identifier corresponding to the third network element. For content of the capability of the third network element, the network element type corresponding to the third network element, and the network element set identifier corresponding to the third network element, respectively refer to the foregoing content of the capability of the first network element, the network element type corresponding to the first network element, and the network element set identifier corresponding to the first network element.

When the at least one third network element has been registered with the second network element, or in another case, step S802 may not need to be performed. In other words, S802 is an optional step, and is shown by using a dashed line in FIG. 8.

S801 and S802 may be performed in any sequence. For example, S801 and S802 are performed simultaneously, or S801 is performed before S802, or S802 is performed before S802. This is not specifically limited.

S803: The first network element sends a first request to the second network element. Correspondingly, the second network element receives the first request from the first network element. In this embodiment of this application, an example in which the first request is used to request discovery of a network element and indicates one or more features is used. Certainly, the first request may further indicate other information (for example, one or more network element types). This is not limited.

For content of the first request and content of the one or more features, respectively refer to the foregoing content of the first request and the foregoing content of the one or more features in FIG. 7. Repeated parts are not described again.

S804: The second network element sends first information to the first network element. Correspondingly, the first network element receives the first information from the second network element. The first information includes information about at least one network element group. The information about the at least one network element group indicates the at least one third network element.

For content of the first information, the information about the at least one network element group, and content of the at least one third network element, respectively refer to the foregoing content of the first information, the foregoing information about the at least one network element group, and the foregoing content of the at least one third network element in FIG. 7. Repeated parts are not described again.

S805: The first network element determines M third network elements from the at least one network element group based on the first information.

For content of the M third network elements and content of determining the M third network elements, respectively refer to the foregoing content of the M third network elements and the foregoing content of determining the M third network elements in FIG. 7. Repeated parts are not described again.

In another possible implementation, the first network element may directly use the at least one third network element as a participant in distributed learning model training. In this case, the first network element does not need to perform step S805. In other words, S805 is an optional step, and is shown by using a dashed line in FIG. 8.

S806: The first network element sends second information to the M third network elements. Correspondingly, the M third network elements receive the second information from the first network element. The second information indicates a feature used to participate in distributed learning model training.

The first network element may directly send the second information respectively to the M third network elements, or the first network element may send the second information respectively to the M third network elements via the coordinator (for example, the fourth network element). This is not specifically limited.

For content of the second information, content of the feature used to participate in distributed learning model training, and content of sending the second information, respectively refer to the foregoing content of the second information, the foregoing content of the feature used to participate in distributed learning model training, and the foregoing content of sending the second information in FIG. 7. Repeated parts are not described again.

In a possible implementation, the first network element determines to trigger a preparation phase of distributed learning model training, and determines the second information. The second information may be considered as preparation information (preparation information) for distributed learning model training. For example, if distributed learning model training is VFL model training, the preparation information may be referred to as VFL training preparation information.

In a possible design, for content in which a piece of second information sent to one third network element indicates a feature used by the third network element to participate in distributed learning model training, refer to the foregoing content in which one piece of second information indicates a feature of one third network element to participate in distributed learning model training in FIG. 7. Repeated parts are not described again. Optionally, the second information that is sent to the one third network element may include at least one of the following: a type identifier of distributed learning model training, a preparation phase identifier, a distributed learning model training ID, a model requirement, alignment information (alignment information) of each third network element for distributed learning model training, or the like. The alignment information includes a sample, a feature, and/or the like of each third network element for distributed learning model training. When the second information includes the alignment information, and the alignment information includes the feature of each third network element for distributed learning model training, it is equivalent to that the second information indicates the feature of each third network element for distributed learning model training.

The type identifier of distributed learning model training indicates a type of distributed learning model training, for example, vertical federated learning between an NWDAF and an AF, vertical federated learning between NWDAFs, or vertical federated learning between NWDAF assisted AFs. The preparation phase identifier indicates the preparation phase of distributed learning model training to be performed. The distributed learning model training ID represents a unique identifier of a training process. The model requirement is, for example, an output category of a model, such as a discrete value, for example, related to a classification algorithm, or an actual value, for example, for a regression algorithm.

In this way, the initiator exchanges information with each participant to adjust a model training process to be performed by each participant. In the training preparation phase, all network elements receive preparation information, where the information indicates that training of local models of the network elements (for example, passive participants) is associated with model training of the initiator. Therefore, each participant can map and control the information required for implementing distributed learning model training.

In an embodiment, S806 may be used as an independent embodiment, and content in FIG. 8 other than S806 may be used as an optional implementation of this embodiment.

S807: The M third network elements each send a first response message to the first network element. Correspondingly, the first network element receives the first response information respectively from the M third network elements. The first response message indicates participation or non-participation in distributed learning model training.

Each third network element in the M third network elements determines, based on the received second information and a locally available related configuration, whether the distributed learning model training process requested by the first network element can be performed. The related configuration is, for example, at least one of a type (for example, between NWDAFs, between an NWDAF and an AF, or between NWDAF assisting AFs) of distributed learning model training in which the third network element can participate, a supported distributed learning model training role (for example, a primary participant, a secondary participant, or a coordinator), or range information of a distributed learning model. The type of distributed learning model training may be understood as a participant type supported in the distributed learning model training process. The range information of the distributed learning model is, for example, an interoperability indicator for distributed learning model training of a vendor participating in the task, and supported analysis filter information (for example, an area of interest (AoI), slice identification, or application identification).

If a third network element can perform the distributed learning model training process requested by the first network element, the first network element may perform preparation work for the request, and the third network element may send, to the first network element, a first response message indicating that the third network element participates; or if a third network element cannot perform the distributed learning model training process requested by the first network element, the third network element may send, to the first network element, a first response message indicating that the third network element does not participate in distributed learning model training. Certainly, the third network element may directly send the first response message to the first network element, or may send the first response message via the coordinator (for example, the fourth network element). For remaining content of the first response message, refer to the foregoing content of the first response message in FIG. 7. Repeated parts are not described again.

After S807, the first network element determines, based on the first response messages from the M third network elements, a final participant for distributed learning model training. For example, if a third network element indicates, in a first response message, that the third network element does not participate in distributed learning model training, the first network element does not select the third network element to participate in distributed learning model training. If a third network element indicates, in a first response message, that the third network element participates in distributed learning model training, the first network element may select the third network element to participate in the distributed learning model training. By analogy, the participant in distributed learning model training is determined.

In this embodiment of this application, the first network element may indicate the one or more expected features to the second network element, to discover the participant supporting the corresponding feature, and complete a feature alignment process. This improves flexibility in determining participants and flexibility in feature alignment. In addition, this embodiment of this application further provides a mechanism for registration of the participant (for example, the first network element and the at least one third network element) with the second network element.

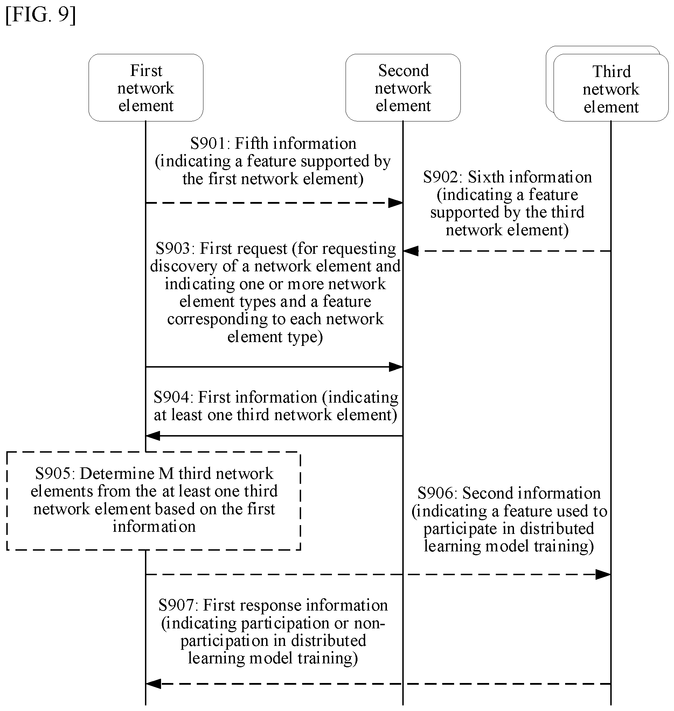

The following uses an example in which the first request indicates the one or more features. With reference to a diagram of a communication method shown in FIG. 9, the following describes the communication method in FIG. 7 by using an example. A quantity of the at least one third network element in FIG. 9 may be any quantity. This is not limited.

S901: The first network element sends fifth information to the second network element. Correspondingly, the second network element receives the fifth information from the first network element. The fifth information indicates a feature supported by the first network element.

For content of the fifth information, refer to the foregoing content of the fifth information in FIG. 8. Repeated parts are not described again.

After receiving the fifth information, the second network element may store the fifth information, and send a first registration response to the first network element. The first registration response indicates that the first network element is successfully registered or the first network element is not successfully registered.

When the first network element has been registered with the second network element before, when the first network element may not need to be registered with the second network element, or in another case, step S901 may not need to be performed. In other words, S901 is an optional step, and is shown by using a dashed line in FIG. 9.

S902: At least one third network element sends sixth information respectively to the second network element. Correspondingly, the second network element receives the sixth information respectively from the at least one third network element.

For content of the sixth information, refer to the foregoing content of the sixth information in FIG. 8. Repeated parts are not described again.

When the at least one third network element has been registered with the second network element, or in another case, step S902 may not need to be performed. In other words, S902 is an optional step, and is shown by using a dashed line in FIG. 9.

S901 and S902 may be performed in any sequence. For example, S901 and S902 are performed simultaneously, or S901 is performed before S902, or S902 is performed before S902. This is not specifically limited.

S903: The first network element sends a first request to the second network element. Correspondingly, the second network element receives the first request from the first network element. In this embodiment of this application, an example in which the first request is used to request discovery of a network element and indicates one or more network element types and a feature corresponding to each network element type is used. A feature corresponding to the one or more network element types is the one or more features. S903 may be understood as that the first network element specifies the feature for the network element type in the first request, which may alternatively be described as that the first network element specifies a network element type corresponding to an expected feature.

For content of the first request, content of the one or more network element types, and content of the one or more features, respectively refer to the foregoing content of the first request, the foregoing content of the one or more network element types, and the foregoing content of the one or more features in FIG. 7. Repeated parts are not described again.

S904: The second network element sends first information to the first network element. Correspondingly, the first network element receives the first information from the second network element. The first information indicates the at least one third network element. For content of the first information and content of the at least one third network element, respectively refer to the foregoing content of the first information and the foregoing content of the at least one third network element in FIG. 7. Repeated parts are not described again.

For example, because the first request specifies the network element type corresponding to the expected feature, the second network element may also discover a network element when a requirement of a corresponding network element type is met. In this case, for the content of the first information, refer to the foregoing content of the first information in FIG. 7. Repeated parts are not described again. When the first information includes information about at least one network element group, a network element type of a network element included in one network element group belongs to the one or more network element types. Optionally, the one network element group may include a feature corresponding to a network element of the one or more network element types.

For example, an example in which the one or more network element types include the NWDAF and the first information includes information about three network element groups (for example, a network element group 1, a network element group 2, and a network element group 3) is used. Information about the network element group 1 includes {NWDAF 1: event ID 1, event ID 4>, <NWDAF 2: event ID 2, event ID 5}. Information about the network element group 2 includes {NWDAF 3: event ID 1, event ID 2, event ID 4, event ID 5}. Information about the network element group 3 includes {NWDAF 4: event ID 1, event ID 2, event ID 4, event ID 5}.

Alternatively, the one or more network element types include the AF and the first information includes information about three network element groups (for example, a network element group 1, a network element group 2, and a network element group 3) is used. Information about the network element group 1 includes {AF 1: feature ID 3, AF 2: feature ID 4}. Information about the network element group 2 includes {AF 3: feature ID 3, feature ID 4}. Information about the network element group 3 includes {AF 4: feature ID 3, feature ID 4}.

S905: The first network element determines M third network elements from the at least one third network element based on the first information.

For content of the M third network elements and content of determining the M third network elements, respectively refer to the foregoing content of the M third network elements and the foregoing content of determining the M third network elements in FIG. 7. Repeated parts are not described again.

In another possible implementation, the first network element may directly use the at least one third network element as a participant in distributed learning model training. In this case, the first network element does not need to perform step S905. In other words, S905 is an optional step, and is shown by using a dashed line in FIG. 9.

S906: The first network element sends second information to the M third network elements. Correspondingly, the M third network elements receive the second information from the first network element. The second information indicates a feature used to participate in distributed learning model training.

For content of the second information, content of the feature used to participate in distributed learning model training, and content of sending the second information, respectively refer to the foregoing content of the second information and the foregoing content of the feature used to participate in distributed learning model training in FIG. 8. Repeated parts are not described again.

S907: The M third network elements each send a first response message to the first network element. Correspondingly, the first network element receives the first response information respectively from the M third network elements. The first response message indicates participation or non-participation in distributed learning model training. For content of the first response message, refer to the foregoing content of the first response message in FIG. 7. Repeated parts are not described again.

After S907, the first network element determines, based on the first response messages from the M third network elements, a final participant for distributed learning model training. For example, if a third network element indicates, in a first response message, that the third network element does not participate in distributed learning model training, the first network element does not select the third network element to participate in distributed learning model training. If a third network element indicates, in a first response message, that the third network element participates in distributed learning model training, the first network element may select the third network element to participate in the distributed learning model training. By analogy, the participant in distributed learning model training is determined.

In this embodiment of this application, the first network element may indicate the one or more expected features and the one or more network element types to the second network element, to discover a participant that supports the corresponding feature and satisfies the corresponding network element type. This improves flexibility in determining participants, and enables the determined participant to meet a requirement of distributed learning model training. In addition, the first network element may further perform feature alignment with the M third network elements, to provide a feature alignment mechanism.

To improve flexibility in determining participants, an embodiment of this application further provides a communication method. In the method, an initiator (for example, a first network element) of distributed learning may determine at least one third network element. Then, the first network element may request a feature supported by the at least one third network element from the at least one third network element, and determine, based on the feature supported by the at least one third network element, a final participant (for example, M network elements) for distributed learning from the at least one third network element. In this way, the participant does not need to be determined in advance, and a mechanism for online determination of distributed participants is implemented. This helps improve flexibility in determining participants.

The following describes, in detail with reference to the accompanying drawings, the communication method provided in this embodiment of this application.

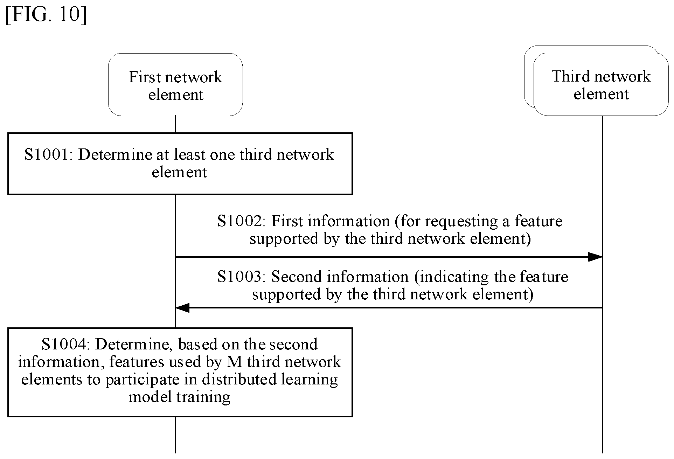

FIG. 10 shows the communication method provided in this embodiment of this application. The following describes steps in FIG. 10.

S1001: The first network element determines at least one third network element.

The at least one third network element may be considered as a candidate network element configured to participate in distributed learning model training. The first network element may prestore information about the at least one third network element, for example, an identifier or an address of the at least one third network element. For an identifier of one third network element, refer to the foregoing identifier of the third network element in FIG. 7. Repeated parts are not described again. In this way, the first network element may determine the at least one third network element based on the prestored information about the at least one third network element. Alternatively, the first network element may receive fourth information from a second network element, where the fourth information indicates information about the at least one third network element. In this way, the first network element may determine the at least one third network element based on the fourth information.

S1002: The first network element sends first information respectively to the at least one third network element. Correspondingly, the at least one third network element receives the first information respectively from the first network element.

The first information that is sent to one third network element is used to request a feature supported by the third network element, which may alternatively be described as being used to request the third network element to feed back the feature supported by the third network element. For content of the feature supported by the third network element, refer to the foregoing content of the feature supported by the third network element in FIG. 7. Repeated parts are not described again. Optionally, the first information includes a feature reporting indication (feature reporting indication), and the feature reporting indication is used to request the third network element to feed back the feature supported by the third network element.

S1003: The at least one third network element sends second information to the first network element. Correspondingly, the first network element receives the second information from the at least one third network element. The second information that is sent by one third network element to the first network element indicates a feature supported by the third network element.

For example, for a manner in which one piece of second information indicates a feature supported by the third network element corresponding to the second information, refer to the foregoing content in which the first request indicates the one or more features. Details are not described herein again. For example, one third network element may register a coarse-grained feature (for example, an NF type(s) and/or NF set ID(s) or an event ID(s)) with the first network element, or one third network element may register a fine-grained feature with the first network element.

S1004: The first network element determines features used by M third network elements to participate in distributed learning model training.

For a manner in manner the first network element determines the M third network elements, refer to the foregoing content of determining the M third network elements in FIG. 7. Repeated parts are not described again. Alternatively, the first network element may use the at least one third network element as the M third network elements.

Because the second information indicates the feature supported by the at least one third network element, the first network element can determine, based on a requirement for distributed learning model training, the features used by the M third network elements to participate in distributed learning model training.

For example, if the first network element is already able to determine a fine-grained feature supported by the third network element when determining the at least one third network element, the first network element may determine, from fine-grained features supported by the M third network elements, the features used by the M third network elements to participate in distributed learning model training. Alternatively, if the second information indicates a coarse-grained feature that needs to be supported by the third network element, the first network element may negotiate, with the third network element by using S1002 and S1003, a fine-grained feature (for example, a feature(s), a feature ID(s), or an event ID(s)) that needs to be used for model training, thereby determining the features used by the M third network elements to participate in distributed learning model training.

In a possible implementation, the M third network elements each sends a first response message to the first network element. Correspondingly, the first network element receives the first response information respectively from the M third network elements. The first response message indicates participation or non-participation in distributed learning model training.

Each third network element in the M third network elements determines, based on the received second information and a locally available related configuration, whether a distributed learning model training process requested by the first network element can be performed. The related configuration is, for example, at least one of a type of distributed learning model training in which the third network element can participate, a supported VFL role, or range information of a distributed learning model.

If a third network element can perform the distributed learning model training process requested by the first network element, the first network element may perform preparation work for the request, and the third network element may send, to the first network element, a first response message indicating that the third network element participates; or if a third network element cannot perform the distributed learning model training process requested by the first network element, the third network element may send, to the first network element, a first response message indicating that the third network element does not participate in distributed learning model training. Certainly, the third network element may directly send the first response message to the first network element, or may send the first response message via the coordinator (for example, the fourth network element).

In this embodiment of this application, the first network element may directly determine the at least one third network element, and determine the final participant for distributed learning model training from the at least one third network element, so that flexibility in determining participants is improved. In addition, the at least one third network element may be registered with the second network element, but does not register the feature supported by the at least one third network element. This reduces a risk that the feature supported by the at least one third network element is leaked.

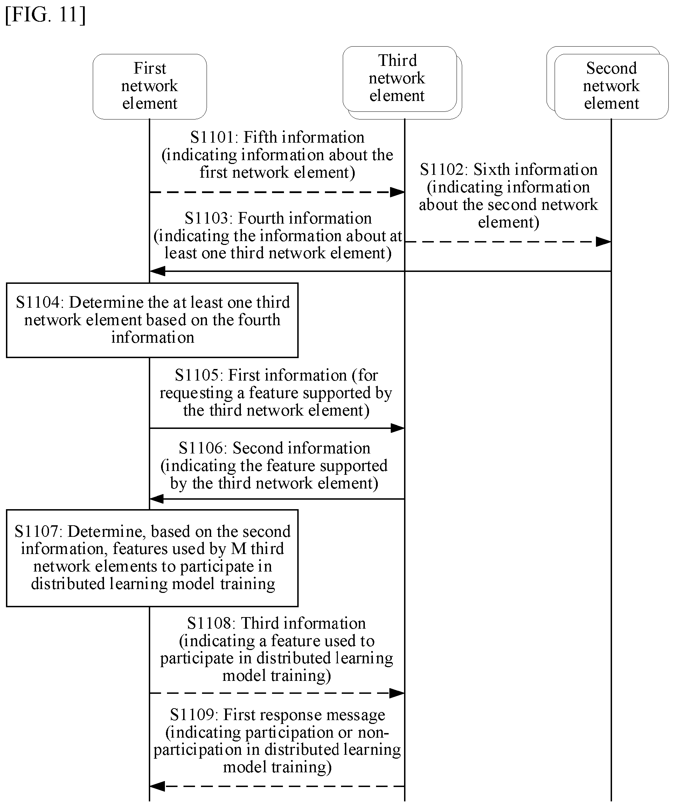

The following uses an example in which the first network element determines the at least one third network element based on the fourth information. With reference to a diagram of a communication method shown in FIG. 11, the following describes the communication method in FIG. 10 by using an example.

S1101: The first network element sends fifth information to the third network element. The fifth information indicates information about the first network element. Correspondingly, the third network element receives the fifth information from the first network element. The fifth information indicates the information about the first network element.

The information about the first network element includes an identifier or an address of the first network element. Optionally, the information about the first network element further includes a network element type and/or a network element capability of the first network element. For content of the network element capability, refer to the foregoing content of the network element capability in FIG. 8. Repeated parts are not described again.

S1102: At least one third network element sends sixth information respectively to a second network element. Correspondingly, the second network element receives the sixth information respectively from the at least one third network element. The sixth information that is sent by one third network element to the second network element indicates information about the third network element.

The information about the third network element includes an identifier or an address of the third network element. Optionally, the information about the third network element further includes a network element type and/or a network element capability of the third network element.

S1103: The second network element sends fourth information to the first network element. Correspondingly, the first network element receives the fourth information from the second network element. The fourth information indicates the information about the at least one third network element. The information about the at least one third network element includes the identifier, the address, or the like of the at least one third network element.

S1104: The first network element determines the at least one third network element based on the fourth information.

Because the fourth information indicates the information about the at least one third network element, the first network element may directly determine the at least one third network element based on the fourth information.

S1105: The first network element sends first information respectively to the at least one third network element. Correspondingly, the at least one third network element receives the first information respectively from the first network element. The first information that is sent to one third network element is used to request a feature supported by the third network element, which may alternatively be described as requesting the third network element to send (or feed back) the feature supported by the third network element, or may alternatively be described as requesting to obtain the feature supported by the third network element.

S1106: The at least one third network element sends second information to the first network element. Correspondingly, the first network element receives the second information from the at least one third network element. The second information indicates the feature supported by the third network element.

For example, the second information includes the identifier or the address of the third network element, and includes the feature supported by the third network element.

S1107: The first network element determines, based on the second information, features used by M third network elements to participate in distributed learning model training.

For content in which the first network element determines the features used by the M third network elements to participate in the distributed learning model training, refer to the foregoing content in which the first network element determines the features used by the M third network elements to participate in the distributed learning model training in FIG. 10. Repeated parts are not described again.

For example, the at least one third network element may register a coarse-grained feature (for example, an NF type(s) and/or NF set ID(s) or an event ID(s)) with the first network element, and the first network element may discover the at least one third network element via the second network element. A network element discovery request indicates a coarse-grained feature that needs to be supported by the third network element. After discovering the third network element, the first network element negotiates, with the third network element by using S1105 and S1106, a fine-grained feature (for example, a feature(s), a feature ID(s), or an event ID(s)) that needs to be used for model training, thereby determining the features used by the M third network elements to participate in distributed learning model training.

S1108: The first network element sends third information respectively to the M third network elements in the at least one third network element. Correspondingly, the M third network elements receive the third information from the first network element. The third information that is sent to one third network element indicates a feature used by the third network element to participate in distributed learning model training. In this way, feature alignment is implemented.

The first network element may directly send the third information respectively to the M third network elements, or the first network element may send the third information respectively to the M third network elements via the coordinator (for example, the fourth network element). This is not specifically limited. For example, the first network element may determine a feature used by each third network element in the at least one third network element to participate in distributed learning model training, and indicate, in the third information that is sent by one of the third network element, a feature used by the third network element to participate in distributed learning model training.

In a possible implementation, the first network element determines to trigger a preparation phase of distributed learning model training, and determines the third information. The third information may be considered as preparation information for distributed learning model training. For example, if distributed learning model training is VFL model training, the preparation information may be referred to as VFL training preparation information.

In a possible design, for a manner in which a piece of third information sent to one third network element indicates a feature used by the third network element to participate in distributed learning model training, refer to the foregoing content in which one piece of second information indicates a feature of one third network element to participate in distributed learning model training in FIG. 7. Details are not described herein again. Optionally, the third information may include at least one of the following: a type identifier of distributed learning model training, a preparation phase identifier, a distributed learning model training ID, a model requirement, alignment information (alignment information) of each third network element for distributed learning model training, or the like. For content of the type identifier of distributed learning model training, the preparation phase identifier, the distributed learning model training ID, the model requirement, and the alignment information of each third network element for distributed learning model training, refer to the foregoing content of the type identifier of distributed learning model training, the preparation phase identifier, the distributed learning model training ID, the model requirement, and the alignment information of each third network element for distributed learning model training in FIG. 8. Details are not described herein again. When the third information includes the alignment information, and the alignment information includes the feature of each third network element for distributed learning model training, it is equivalent to that the third information indicates the feature of each third network element for distributed learning model training.

In an embodiment, S1108 may be used as an independent embodiment, and content in FIG. 11 other than S1108 may be used as an optional implementation of this embodiment.

S1109: The M third network elements each send a first response message to the first network element. Correspondingly, the first network element receives the first response messages respectively sent by the at least one third network element. The first response message indicates participation or non-participation in distributed learning model training. For content of the first response message, refer to the foregoing content of the first response message in FIG. 10. Repeated parts are not described again.

After S1109, the first network element determines, based on the first response messages from the M third network elements, a final participant for distributed learning model training. For example, if a third network element indicates, in a first response message, that the third network element does not participate in distributed learning model training, the first network element does not select the third network element to participate in distributed learning model training. If a third network element indicates, in a first response message, that the third network element participates in distributed learning model training, the first network element may select the third network element to participate in the distributed learning model training. By analogy, the participant in distributed learning model training is determined.

In this embodiment of this application, the participant does not need to register a feature supported by the participant with the second network element, so that a risk of feature leakage is reduced. The first network element may discover the at least one third network element via the second network element, and request the at least one third network element to report the feature supported by the first network element. The first network element determines, based on the feature reported by the at least one third network element, the M third network elements participating in vertical federated learning, so that flexibility in determining to participate in distributed learning model training is improved. In addition, the first network element may further determine the features used by the M third network elements used to participate in distributed learning model, thereby completing a feature alignment process.

It may be understood that to implement functions in the foregoing embodiments, the network elements include corresponding hardware structures and/or corresponding software modules for performing the functions. A person skilled in the art should be easily aware that in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

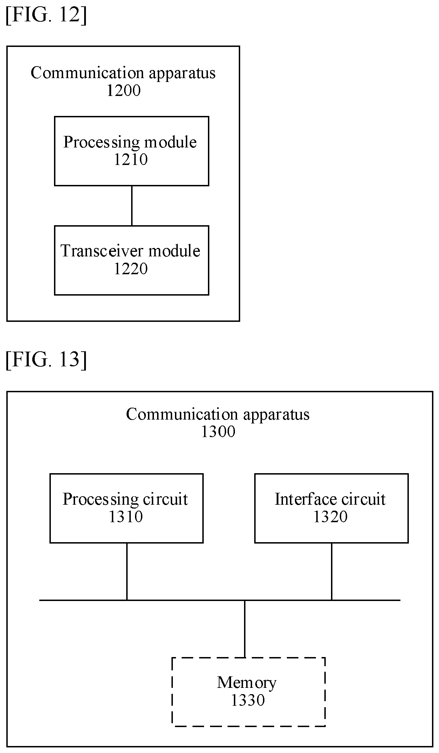

FIG. 12 is a diagram of a structure of a communication apparatus according to an embodiment of this application. The communication apparatus may be configured to implement functions of the first network element, the second network element, or any third network element in the foregoing method embodiments, and therefore may also implement beneficial effects of the foregoing method embodiments. In this embodiment of this application, the communication apparatus may be the primary participant or the secondary participant in FIG. 2, the initiator or the first network element in FIG. 4, the initiator or the AF in FIG. 6, the registry or the second network element in FIG. 4, any network element (for example, the VFLSF) in FIG. 5, the registry or the VFLSF in FIG. 6, the primary participant or the secondary participant in FIG. 2, the registry or the second network element in FIG. 4, any network element in FIG. 5, or the another participant or any third network element in FIG. 6.

As shown in FIG. 12, the communication apparatus 1200 includes a processing module 1210 and a transceiver module 1220. The communication apparatus 1200 is configured to implement a function of the first network element in any one of the method embodiments shown in FIG. 7 to FIG. 9, implement a function of the second network element in any one of the method embodiments shown in FIG. 7 to FIG. 9, implement a function of the first network element in the method embodiment shown in FIG. 10 or FIG. 11, or implement a function of any third network element in the method embodiment shown in FIG. 10 or FIG. 11.

In a first embodiment, the communication apparatus 1200 is configured to implement the function of the first network element in any one of the method embodiments shown in FIG. 7 to FIG. 9.

For example, the transceiver module 1220 is configured to send a first request and receive first information under control of the processing module 1210. Optionally, the processing module 1210 is further configured to determine M third network elements.

In a second embodiment, the communication apparatus 1200 is configured to implement the function of the second network element in any one of the method embodiments shown in FIG. 7 to FIG. 9.

For example, the transceiver module 1220 is configured to receive a first request and send first information under control of the processing module 1210.

In a third embodiment, the communication apparatus 1200 is configured to implement the function of the first network element in the method embodiment shown in FIG. 10 or FIG. 11.

For example, the transceiver module 1220 is configured to: send first information and receive second information. The processing module 1210 is configured to: determine at least one third network element and determine features used by M third network elements to participate in distributed learning model training.

In a fourth embodiment, the communication apparatus 1200 is configured to implement the function of the third network element in the method embodiment shown in FIG. 10 or FIG. 11.

For example, the transceiver module 1220 is configured to receive first information and send second information under control of the processing module 1210.

For more detailed descriptions of the processing module 1210 and the transceiver module 1220, directly refer to related descriptions in the method embodiment shown any one of in FIG. 7 to FIG. 11. Details are not described herein.

FIG. 13 is a diagram of a structure of a communication apparatus according to an embodiment of this application. The communication apparatus may be configured to implement functions of the first network element, the second network element, or any third network element in the foregoing method embodiments, and therefore may also implement beneficial effects of the foregoing method embodiments. In this embodiment of this application, the communication apparatus may be the primary participant or the secondary participant in FIG. 2, the initiator or the first network element in FIG. 4, the initiator or the AF in FIG. 6, the registry or the second network element in FIG. 4, any network element (for example, the VFLSF) in FIG. 5, the registry or the VFLSF in FIG. 6, the primary participant or the secondary participant in FIG. 2, the registry or the second network element in FIG. 4, any network element in FIG. 5, or the another participant or any third network element in FIG. 6. As shown in FIG. 13, the communication apparatus 1300 includes a processing circuit 1310 and an interface circuit 1320. The processing circuit 1310 and the interface circuit 1320 are coupled to each other. For an implementation of the processing circuit 1310, refer to the foregoing content. Repeated parts are not described again. The interface circuit 1320 may be a transceiver or an input/output interface. Optionally, the communication apparatus 1300 may further include a memory 1330, configured to store instructions executed by the processing circuit 1310, store input data required by the processing circuit 1310 to run instructions, or store data generated after the processing circuit 1310 runs instructions.

The communication apparatus 1300 may be configured to implement the method embodiment shown in any one of FIG. 7 to FIG. 11. Optionally, the communication apparatus 1200 may be configured to implement a function of the communication apparatus 1200 shown in FIG. 12. For example, the processing circuit 1310 is configured to implement a function of the processing module 1210, and the interface circuit 1320 is configured to implement a function of the transceiver module 1220.

When the communication apparatus is a chip applied to a network element (for example, the first network element, the second network element, or the third network element), the chip of the network element implements a function of the network element in the foregoing method embodiments. The chip of the network element receives information from another module (for example, a radio frequency module or an antenna) of the network element, where the information is sent by another network element to the network element. Alternatively, the chip of the network element sends information to another module (for example, a radio frequency module or an antenna) of the network element, where the information is sent by the network element to another network element.

The memory in embodiments of this application may include a volatile memory (volatile memory), for example, a random access memory (random access memory, RAM). The memory may further include a non-volatile memory (non-volatile memory), for example, a read-only memory (read-only memory, ROM), a flash memory, a hard disk drive (hard disk drive, HDD), or a solid state drive (solid state drive, SSD).

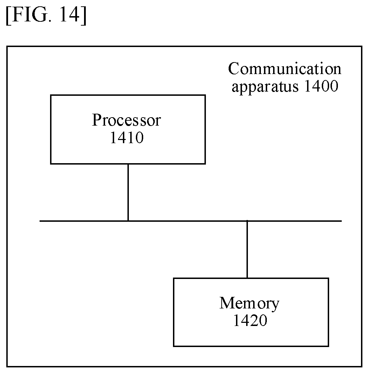

An embodiment of this application provides another example of a communication apparatus. The communication apparatus includes at least one processor and at least one memory. The at least one processor is coupled to the at least one memory. The at least one memory is configured to store instructions. When the instructions are executed by the at least one processor, the communication apparatus is caused to implement the methods in the foregoing embodiments. For example, the communication apparatus includes one processor and one memory. As shown in FIG. 14, the communication apparatus 1400 includes one processor 1410 and one memory 1420. The processor 1410 is coupled to the memory 1420. The memory 1420 stores instructions. When the instructions stored in the memory 1420 are executed by the processor 1410, the communication apparatus 1400 performs the method in any one of the foregoing embodiments.

The processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor.

The method steps in embodiments of this application may be implemented in hardware, or may be implemented in software instructions that may be executed by a processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk drive, a CD-ROM, or any other form of storage medium well-known in the art. For example, the storage medium is coupled to the processor, so that the processor can read information from the storage medium and write information into the storage medium. The storage medium may alternatively be a component of the processor. The processor and the storage medium may be disposed in an ASIC. In addition, the ASIC may be located in a base station or a terminal. Certainly, the processor and the storage medium may exist in the base station or the terminal as discrete components.

All or a part of the foregoing embodiments may be implemented by using software, hardware, firmware, or any combination thereof. When software is used to implement the foregoing embodiments, all or a part of the foregoing embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk drive, or a magnetic tape; may be an optical medium, for example, a digital video disc; or may be a semiconductor medium, for example, a solid state drive. The computer-readable storage medium may be a volatile or non-volatile storage medium, or may include two types of storage media: a volatile storage medium and a non-volatile storage medium.

An embodiment of this application provides a communication system. The communication system includes a first network element and a second network element. The first network element may implement a function of the first network element in any one of the method embodiments in FIG. 7 to FIG. 9, and the second network element may implement a function of the second network element in any one of the method embodiments in FIG. 7 to FIG. 9. Optionally, the communication apparatus further includes at least one third network element, and the at least one third network element may implement a function of the at least one third network element in any one of the method embodiments in FIG. 7 to FIG. 9.

An embodiment of this application provides a communication system. The communication system includes a first network element and at least one third network element. The first network element may implement a function of the first network element in the method embodiment in FIG. 10 or FIG. 11, and the at least one third network element may implement a function of the at least one third network element in the method embodiment in FIG. 10 or FIG. 11. Optionally, the communication system further includes a second network element, and the second network element may implement a function of the second network element in the method embodiment in FIG. 10 or FIG. 11.

An embodiment of this application provides a chip system. The chip system includes a processor and an interface. The processor is configured to invoke instructions from the interface and run the instructions. When the processor executes the instructions, the method in any one of FIG. 7 to FIG. 11 is implemented.

An embodiment of this application provides a computer-readable storage medium. The computer-readable storage medium is configured to store a computer program or instructions. When the computer program or the instructions are run, the method in any one of FIG. 7 to FIG. 11 is implemented.

An embodiment of this application provides a computer program product including instructions. When the computer program product runs on a computer, the method in any one of FIG. 7 to FIG. 11 is implemented.

In embodiments of this application, unless otherwise stated or if there is a logic conflict, terms and/or descriptions in different embodiments are consistent and may be mutually referenced, and technical features in different embodiments may be combined into a new embodiment based on an internal logical relationship thereof.

It can be understood that various numbers in embodiments of this application are merely intended for differentiation for ease of description, but not to limit the scope of embodiments of this application. Sequence numbers of the foregoing processes do not mean an execution sequence, and the execution sequence of the processes should be determined based on functions and internal logic of the processes.

## Claims

1. A communication method, applied to a vertical federated learning server and comprising:
sending a first request to a network repository function network element, wherein the first request is used to request discovery of a vertical federated learning client, the first request indicates one or more feature identifiers, and the one or more feature identifiers indicate a feature used for vertical federated learning model training by the vertical federated learning client requested to be discovered; and
receiving first information from the network repository function network element, wherein the first information comprises information about at least one vertical federated learning client, and a combination of feature identifiers supported by the at least one vertical federated learning client comprises the one or more feature identifiers.

2. The method according to claim 1, wherein
the first request further indicates one or more network element types and a feature identifier corresponding to each of the one or more network element types, and the feature identifier corresponding to each network element type belongs to the one or more feature identifiers; and
a network element type of the at least one vertical federated learning client belongs to the one or more network element types.

3. The method according to claim 1 or 2, wherein
the first information further indicates a feature identifier corresponding to each of the at least one vertical federated learning client.

4. The method according to claim 3, wherein
the feature identifier corresponding to each of the at least one vertical federated learning client is a feature identifier among the one or more feature identifiers.

5. The method according to claim 3 or 4, wherein the method further comprises:
determining M vertical federated learning clients based on the at least one vertical federated learning client, wherein the M vertical federated learning clients are configured to participate in vertical federated learning model training.

6. The method according to claim 5, wherein the method further comprises:
determining a feature identifier used by each of the M vertical federated learning clients to participate in vertical federated learning model training; and
sending second information respectively to the M vertical federated learning clients, wherein the second information that is sent to one of the M vertical federated learning clients indicates a feature identifier used by the vertical federated learning client to participate in vertical federated learning model training.

7. The method according to any one of claims 1 to 6, wherein the first information comprises:
information about at least one vertical federated learning client group, wherein one vertical federated learning client group comprises all or part of the at least one vertical federated learning client, and a combination of feature identifiers supported by the vertical federated learning client in the one vertical federated learning client group comprises the one or more feature identifiers.

8. The method according to claim 7, wherein
the first request further indicates the one or more network element types and the feature identifier corresponding to each of the one or more network element types, and the feature identifier corresponding to each network element type belongs to the one or more feature identifiers; and
a network element type of any vertical federated learning client in the one vertical federated learning client group is a first network element type, the first network element type is one of the one or more network element types, and the combination of feature identifiers supported by the vertical federated learning client in the one vertical federated learning client group comprises a feature identifier corresponding to the first network element type indicated by the first request.

9. The method according to claim 7, wherein
the first request further indicates the one or more network element types and the feature identifier corresponding to each of the one or more network element types, and the feature identifier corresponding to each network element type belongs to the one or more feature identifiers; and
a combination of network element types of the vertical federated learning client in the one vertical federated learning client group comprises the one or more network element types, a network element type of any vertical federated learning client in the one vertical federated learning client group is one of the one or more network element types, a combination of feature identifiers supported by all vertical federated learning clients, whose network element type is a first network element type, in the one vertical federated learning client group comprises a feature identifier corresponding to the first network element type indicated by the first request, and the first network element type is one of the one or more network element types.

10. The method according to any one of claims 1 to 9, wherein the method further comprises:
sending third information respectively to the at least one vertical federated learning client, wherein the third information that is sent to one of the at least one vertical federated learning client indicates the vertical federated learning client to provide a feature identifier supported by the vertical federated learning client; and
receiving fourth information respectively from the at least one vertical federated learning client, wherein the fourth information that is received from one of the at least one vertical federated learning client indicates a feature identifier supported by the vertical federated learning client.

11. The method according to any one of claims 1 to 10, wherein the method further comprises:
sending fifth information to the network repository function network element, wherein the fifth information indicates a feature identifier supported by the vertical federated learning server.

12. A communication method, applied to a network repository function network element, wherein the method comprises:
receiving a first request from a vertical federated learning server, wherein the first request is used to request discovery of a vertical federated learning client, the first request indicates one or more feature identifiers, and the one or more feature identifiers indicate a feature used for vertical federated learning model training by the vertical federated learning client requested to be discovered; and
sending first information to the vertical federated learning server, wherein the first information comprises information about at least one vertical federated learning client, and a combination of feature identifiers supported by the at least one vertical federated learning client comprises the one or more feature identifiers.

13. The method according to claim 12, wherein
the first request further indicates one or more network element types and a feature identifier corresponding to each of the one or more network element types, and the feature identifier corresponding to each network element type belongs to the one or more feature identifiers; and
a network element type of the at least one vertical federated learning client belongs to the one or more network element types.

14. The method according to claim 12 or 13, wherein
the first information further indicates a feature identifier corresponding to each of the at least one vertical federated learning client.

15. The method according to claim 14, wherein
the feature identifier corresponding to each of the at least one vertical federated learning client is a feature identifier among the one or more feature identifiers.

16. The method according to any one of claims 12 to 15, wherein the first information comprises:
information about at least one vertical federated learning client group, wherein information about one vertical federated learning client group comprises all or part of the one vertical federated learning client, and a combination of feature identifiers supported by the vertical federated learning client in the one vertical federated learning client group comprises the one or more feature identifiers.

17. The method according to claim 16, wherein the first request further indicates the one or more network element types and the feature identifier corresponding to each of the one or more network element types, and the feature identifier corresponding to each network element type belongs to the one or more feature identifiers; and
a network element type of any vertical federated learning client in the one vertical federated learning client group is a first network element type, the first network element type is one of the one or more network element types, and the combination of feature identifiers supported by the vertical federated learning client in the one vertical federated learning client group comprises a feature identifier corresponding to the first network element type indicated by the first request.

18. The method according to claim 16, wherein the first request further indicates the one or more network element types and the feature identifier corresponding to each of the one or more network element types, and the feature identifier corresponding to each network element type belongs to the one or more feature identifiers; and
a combination of network element types of the vertical federated learning client in the one vertical federated learning client group comprises the one or more network element types corresponding, a network element type of any vertical federated learning client in the one vertical federated learning client group is one of the one or more network element types, a combination of feature identifiers supported by all vertical federated learning clients, whose network element type is a first network element type, in the one vertical federated learning client group comprises a feature identifier corresponding to the first network element type indicated by the first request, and the first network element type is one of the one or more network element types.

19. The method according to any one of claims 12 to 18, wherein the method further comprises:
receiving fifth information from the vertical federated learning server, wherein the fifth information indicates a feature identifier supported by the vertical federated learning server; and/or
receiving sixth information from the at least one vertical federated learning client, wherein the sixth information that is received from one of the at least one vertical federated learning client indicates a feature identifier supported by the vertical federated learning client.

20. A communication method, applied to a first network element, wherein the method comprises:
determining at least one third network element;
sending first information respectively to the at least one third network element, wherein the first information that is sent to one of the at least one third network element is used to request a feature supported by the third network element, and all or part of a feature supported by the at least one third network element is a feature corresponding to data for distributed learning model training;
receiving second information respectively from the at least one third network element, wherein the second information that is received from one of the at least one third network element indicates a feature supported by the third network element; and
determining, based on the second information received from the at least one third network element, features used by M third network elements to participate in distributed learning model training, wherein the M third network elements are all or part of the at least one third network element, and M is a positive integer.

21. The method according to claim 20, wherein the method further comprises:
sending third information respectively to the M third network elements, wherein the third information that is sent to one of the M third network elements indicates a feature used to participate in distributed learning model training.

22. The method according to claim 20 or 21, wherein the determining the at least one third network element comprises:
receiving fourth information from a second network element, wherein the fourth information indicates information about the at least one third network element; and determining the at least one third network element based on the fourth information.

23. A communication method, applied to a third network element, wherein the method comprises:
receiving first information from a first network element, wherein the first information is used to request a feature supported by the third network element; and
sending second information to the first network element, wherein the second information indicates the feature supported by the third network element.

24. The method according to claim 23, wherein the method further comprises:
receiving third information from the first network element, wherein the third information indicates a feature used by the third network element to participate in distributed learning model training.

25. The method according to claim 23 or 24, wherein the method further comprises:
sending fifth information to a second network element, wherein the fifth information indicates information about the third network element.

26. A communication apparatus, comprising:
a module configured to perform the method according to any one of claims 1 to 11;
a module configured to perform the method according to any one of claims 12 to 19;
a module configured to perform the method according to any one of claims 20 to 22; or
a module configured to perform the method according to any one of claims 23 to 25.

27. A communication apparatus, comprising a processor and a memory, wherein the memory is configured to store program instructions, and the processor is configured to execute the program instructions in the memory, to implement the method according to any one of claims 1 to 11, implement the method according to any one of claims 12 to 19, implement the method according to any one of claims 20 to 22, or implement the method according to any one of claims 23 to 25.

28. A communication apparatus, comprising a processing circuit and an interface circuit, wherein
the interface circuit is configured to be coupled to a memory outside the communication apparatus, and provide a communication interface for the processing circuit to access the memory; and the processing circuit is configured to execute program instructions in the memory, to implement the method according to any one of claims 1 to 11, implement the method according to any one of claims 12 to 19, implement the method according to any one of claims 20 to 22, or implement the method according to any one of claims 23 to 25.

29. A computer program product comprising instructions, wherein when the instructions are run by a communication apparatus, the communication apparatus is caused to implement the method according to any one of claims 1 to 11, implement the method according to any one of claims 12 to 19, implement the method according to any one of claims 20 to 22, or implement the method according to any one of claims 23 to 25.

30. A computer-readable storage medium, wherein the storage medium stores a computer program or instructions, and when the computer program or the instructions are executed by a communication apparatus, the method according to any one of claims 1 to 11 is implemented, the method according to any one of claims 12 to 19 is implemented, the method according to any one of claims 20 to 22 is implemented, or the method according to any one of claims 23 to 25 is implemented.
